# EUROPEAN PATENT APPLICATION

(11) **EP 4 832 390 A1**
(43) Date of publication of application: **28.10.2026**
(21) Application number: 26174417.1
(22) Date of filing: 24.04.2026
(51) Int. Cl.: H04L 1/1829, H04L 1/1607, H04L 47/34, H04L 49/9057, H04L 69/324

(54) **RELIABLE TRANSPORT OF MEMORY TRANSACTIONS**

(30) Priority: 25.04.2025 US 202563794854 P; 13.06.2025 US 202563823615 P; 07.07.2025 US 202563839762 P; 04.03.2026 US 202619556384
(71) Applicant: Avago Technologies International Sales Pte. Limited, Singapore 768923 (SG)
(72) Inventor: KALKUNTE, Mohan, Irvine, 92618 (US); SCHRAMM, Karen Maria, Irvine, 92618 (US); SPADA, Eric John, Irvine, 92618 (US); VAIDYA, Niranjan, Irvine, 92618 (US); COX, Ian Bruce Bernard, Irvine, 92618 (US); GRISWOLD, Mark David, Irvine, 92618 (US); WINTERBLE, Scott, Irvine, 92618 (US); ELNATHAN, Nathan, Irvine, 92618 (US); OPSASNICK, Eugene N., Irvine, 92618 (US); TABATABAEE, Vahid, Irvine, 92618 (US)
(74) Representative: Dilg, Haeusler, Schindelmann Patentanwaltsgesellschaft mbH

(57) **Abstract**

In some embodiments, a device may include a circuit configured to send a plurality of packets, each corresponding to one or more memory transactions and including a respective packet sequence number (PSN). The circuit may receive a first packet from an endpoint, determine a first expected packet sequence number (EPSN) of the first packet and a first PSN included in the first packet. In response to determining that the first EPSN is equal to the first PSN, update the first EPSN to a second ESPN, the circuit may send, to the endpoint, an acknowledgement (ACK) message identifying the second EPSN and indicating the first packet is an in-order packet. In response to determining that the first ESPN is not equal to the first PSN, the circuit may send, to the endpoint, a negative acknowledgement (NACK) message identifying the first EPSN and indicating the first packet is an out-of-order packet.

## Description

### Field of the Disclosure

This disclosure generally relates to systems and methods for network interface architectures, and more particularly to Ethernet-based load-store systems that provide reliable transport of memory transactions between computing endpoints.

### Background of the Disclosure

In disaggregated and heterogeneous computing systems, endpoints such as CPUs, GPUs, DPUs (Data Processing Units), and memory controllers increasingly may require remote load/store semantics that extend beyond a board or socket boundary. There is a need for transport of memory transactions across network fabrics operating at 100G/200G/400G and higher line rates.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGS. 1B and 1C are block diagrams depicting computing devices useful in connection with the methods and systems described herein, according to some embodiments.
FIG. 2 illustrates an example system environment in which an Ethernet-based load-store system integrates a system-on-chip (SoC) with one or more transport subsystems, according to some embodiments.
FIG. 3 is a diagram illustrating datapaths and associated credit loops in an Ethernet-based load-store system, according to some embodiments.
FIG. 4 is a diagram illustrating datapath connectivity for interfaces between SoC logic and an Ethernet-based load-store system, according to some embodiments.
FIG. 5 is a diagram illustrating interfaces that carry request and response transactions between a source endpoint and a destination endpoint, according to some embodiments.
FIG. 6 is a diagram illustrating credit loops established between an SoC and an Ethernet-based load-store system, according to some embodiments.
FIG. 7 is a diagram illustrating write-request and write-response bit mapping and flow between SoC logic and an Ethernet-based load-store system, according to some embodiments.
FIG. 8 is a diagram illustrating read-request and read-response bit mapping and flow between SoC logic and an Ethernet-based load-store system, according to some embodiments.
FIG. 9 is a diagram illustrating an example network transmit path of an Ethernet-based load-store system, according to some embodiments.
FIG. 10 is a diagram illustrating an example network receive path of an Ethernet-based load-store system, according to some embodiments.
FIG. 11 is a diagram illustrating an example integration of an Ethernet-based load-store system with SoC logic, according to some embodiments.
FIG. 12 is a flow diagram showing an example process for transporting memory transactions over an Ethernet network, according to some embodiments.
FIG. 13 is a flow diagram showing another example process for transporting memory transactions over an Ethernet network, according to some embodiments.

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are hereby incorporated herein by reference in their entirety and are made part of the present disclosure for all purposes: IEEE 802.1 standards and IEEE 802.3 standards, including but not limited to IEEE 802.1Q^{™}, IEEE 802.1AX^{™}, IEEE 802.1CB^{™}, IEEE 802.3ae^{™}, IEEE 802.3ba^{™}, IEEE 802.3bj^{™}, IEEE 802.3by^{™}, IEEE 802.3cd^{™}, and IEEE 802.3ck^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
Section A describes a network environment and computing environment which can be useful for practicing embodiments described herein; and
Section B describes embodiments of systems and methods for providing a scaled up Ethernet framework.

### A. Computing and Network Environment

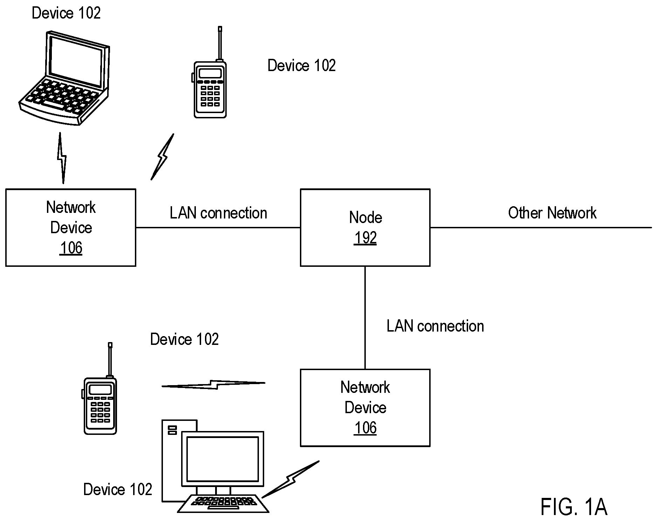

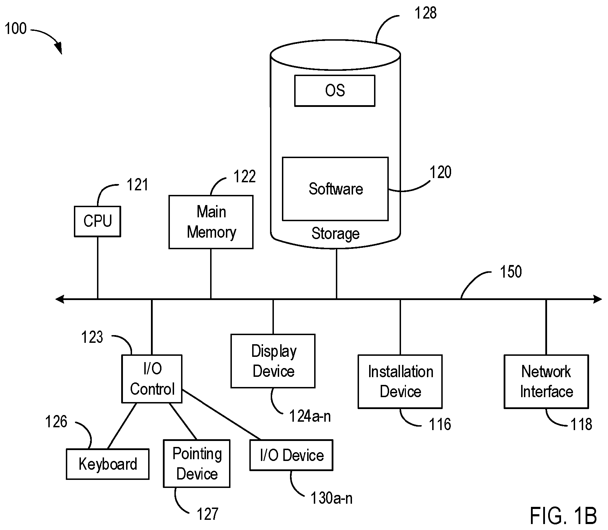

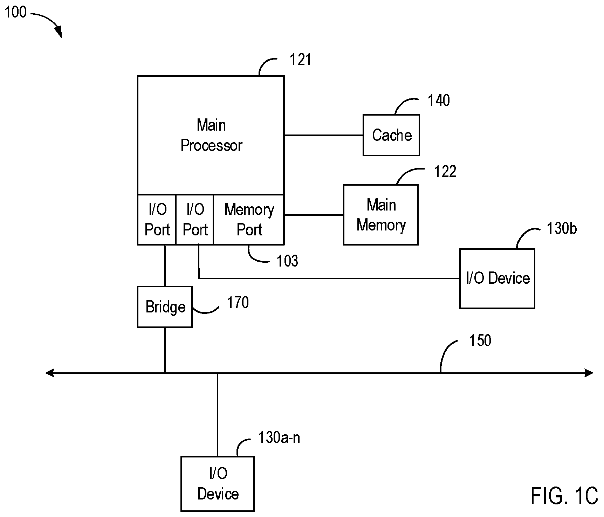

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Systems And Methods For Providing Reliable Transport of Memory Transactions Between Computing Endpoints

In one aspect, in transporting memory transactions over Ethernet, there may be the semantic mismatch between bus-level memory transactions and packet flows, where address/control and data phases travel as independent channels on the compute side, but may need be serialized into packet payloads and headers for carriage across a network that may reorder, replicate, or drop frames. This mismatch may complicate preservation of pairing between write-address and write-data, correlation of responses to requests across many outstanding operations, and enforcement of burst size and alignment constraints without incurring prohibitive per-packet overhead. Additional difficulty arises from the need to achieve high wire efficiency for small, latency-sensitive operations by packing multiple transactions per packet while avoiding head-of-line penalties, partial-packet loss ambiguities, and/or undue queuing delay for the earliest aggregated operation. Further, endpoints and intermediate devices exhibit asymmetric production and consumption rates, and there is a need for admission control that protects limited interface and packetization buffers at transaction granularity, while supporting multi-tenant isolation and quality-of-service partitioning that prevents one traffic class or destination from inducing congestion collapse for others.

In another aspect, reliable delivery over Ethernet remains challenging due to transient congestion, microbursts, and rare physical-layer errors that manifest as loss, duplication, or corruption, any of which can violate the strict in-order expectations of memory semantics if not detected and recovered promptly. Timely and bandwidth-efficient feedback is difficult to achieve because acknowledgment signaling competes with data for reverse-path capacity, and overly sparse feedback inflates retransmission latency and inflight buffer occupancy, whereas overly frequent feedback increases control overhead and processing pressure at high transaction rates. Retransmission strategy selection is non-trivial: go-back-style recovery wastes bandwidth when loss is sparse yet ordered, while selective repeat requires deeper receiver state and reassembly capability.

In yet another aspect, congestion visibility and control are limited on conventional Ethernet paths; static or poorly tuned congestion windows can either underutilize the fabric or induce persistent queues and tail-latency inflation, and their interaction with link-level flow control mechanisms (e.g., pause-based schemes) can create pathological pause propagation, deadlock risks, or starvation in multi-priority deployments. Moreover, accurate recovery timing is undermined by variable round-trip times, clock-domain tolerances, and asymmetric traffic patterns that starve reverse-path signaling; misconfigured timers or static thresholds can trigger spurious retransmissions or delayed loss detection, magnifying head-of-line blocking and reducing overall goodput for memory-transaction traffic.

To address these limitations, the present disclosure can provide Ethernet-based load-store systems (referred to as "systems") that provide reliable transport of memory transactions between computing endpoints. In some embodiments, the term "load-store system" may refer to a network-attached subsystem that provides remote load (read) and store (write) semantics by packetizing transactions (e.g., Advanced eXtensible Interface (AXI) transaction) for transmission over high-speed Ethernet and de-packetizing completions back into AXI at a host boundary. The system may integrate with an Ethernet device (also referred to as "Ethernet port device" or "Ethernet PHY") to operate at line rates such as 400 Gb/s and may employ reliable transport with acknowledgments and negative acknowledgments, per-virtual-channel lossless flow control, and credit-based flow control on a per-AXI-channel basis to preserve ordering and prevent overflow. In some implementations, the Ethernet device may implement or include one or more Ethernet port functions that include, but are not limited to, media access control (MAC), physical coding device (PCD) or physical coding sublayer (PCS), physical medium dependent layer (PMD), and/or serializer/de-serializer (SERDES) and associated functionalities thereof).

In some embodiments, a device for transporting memory transactions over an Ethernet network, may include a first interface, a second interface, and a circuit. The term "memory transactions" may refer to operations that convey read, write, or related control semantics between devices, including address/control information and, where applicable, associated data sized for fixed-length bursts. In some embodiments, such transactions are originated on host-visible channels and are translated into packet payloads for transport over a fabric while preserving correlation between requests and responses. The term "Ethernet network" may refer to a packet-switched communication fabric capable of carrying Ethernet frames at high line rates and supporting encapsulations suitable for transactional payloads, including environments employing MAC/PCS functions and optional link-level reliability or flow-control features. The term "first interface" may refer to a host-facing interface that communicates with a compute subsystem using multiple logical channels that separate address/control from data and responses, and that accepts or emits transfers (with either a fixed size or a variable size) compatible with the host's bus semantics. The term "second interface" may refer to a network-facing interface configured to exchange Ethernet packets with the fabric and to host link-layer functionality, including but not limited to MAC processing circuitry and PCS processing circuitry that together realize a high-speed Ethernet port. The term "circuit" may refer to logic coupled between the first interface and the second interface that forms and interprets network packets in a transaction-aware manner, including functionality to packetize requests, depacketize responses, perform integrity checks, manage sequencing, and interact with per-channel flow-control mechanisms.

In some embodiments, the first interface may be configured to communicate with a host device. The term "host device" may refer to a processor complex, SoC, accelerator, or other computing entity that issues and consumes memory transactions over the first interface, such as by presenting and/or receiving write address and write data on different channels and receiving corresponding responses after network transport. The second interface may be configured to exchange Ethernet packets with the Ethernet network. The term "Ethernet packets" may refer to frames conveyed by the Ethernet network that encapsulate one or more transaction units and transport headers, potentially aggregating multiple operations destined to a common endpoint up to a configured packet size threshold while preserving each transaction's atomicity. The circuit may be coupled to the first interface and the second interface and configured to packetize one or more memory transaction requests received from the first interface, into a first Ethernet packet. The term "packetize" may refer to forming a first Ethernet packet from one or more memory transaction requests received at the first interface, including arranging opaque control fields and data into a packed payload, assigning transport metadata such as destination identifiers and sequence numbers, and respecting configuration such as maximum packet size without splitting individual transactions. The term "memory transaction requests" may refer to host-originated operations that initiate memory semantics, such as read addresses or write requests comprising write address with corresponding write data, which the circuit aligns and aggregates for efficient transmission over the Ethernet network. The circuit may be configured to transmit, via the second interface to the Ethernet network, the first Ethernet packet. The circuit may be configured to depacketize a second Ethernet packet received from the second interface, into one or more memory transaction responses or one or more transaction requests. The term "depacketize" may refer to processing a second Ethernet packet received at the second interface to recover one or more memory transaction responses or one or more memory transaction requests, validating integrity, interpreting transport fields, and reconstructing channel-specific response information for presentation to the host device. The circuit may be configured to transmit, via the first interface to the host device, the one or more memory transaction responses or the one or more memory transaction requests. The term "memory transaction requests" may refer to one or more requests for reading data or one or more requests for writing data, which the circuit emits to the host device via the first interface. For example, the host device may issue write or read requests into the first interface. These transactions may be packetized and transferred into the second interface. These packetized requests may be received by another Ethernet load-store subsystem's second interface.

The term "memory transaction responses" may refer to completions associated with prior requests, such as read data with response codes or write acknowledgements correlated to earlier writes, which the circuit emits to the host device via the first interface in accordance with the host's ordering and identification rules. For example, requests from another Ethernet load-store subsystem may be received at the second interface, depacketized, and then transferred into the host device. These requests may be processed by the host device (specifically the memory subsystem), This processing may then result in "response" transactions (or which would then be returned back to the ethernet subsystem and/or host device which sent the requests. The response transactions may follow the same flow as the request albeit in the reverse direction. That is, the responses may be transferred into the first interface, packetized, and then sent out via the second interface.

In some embodiments, the second interface may include media access control (MAC) processing circuity and physical coding sublayer (PCS) processing circuitry. The term "media access control (MAC) processing circuitry" may refer to link-layer logic within the second interface that performs Ethernet framing, delineation, checksum handling, and priority or pause behaviors consistent with high-rate operation, and that cooperates with higher transport functions carrying transaction payloads. The term "physical coding sublayer (PCS) processing circuitry" may refer to physical-layer logic within the second interface that encodes and decodes symbols for multi-lane operation, including scrambling, alignment, forward error correction (FEC), and lane distribution, enabling robust conveyance of Ethernet packets that encapsulate memory transactions.

In some embodiments, the first interface may be configured to communicate with the host device using a plurality of channels. The term "plurality of channels" may refer to distinct logical paths on the first interface that separate address/control, data, and responses, permitting independent flow control and skew tolerance so that address and data phases of a write request can arrive on different channels while remaining pairable by the circuit. The first interface may be configured to receive, from the host device, a memory write request including a write address and write data which are received through different channels among the plurality of channels. The term "memory write request" may refer to a host-initiated operation containing a write address and corresponding write data communicated on different channels of the first interface, which the circuit aligns and encapsulates as a single transaction unit for transport. The circuit may be configured to align the write address and the write data prior to packetizing the memory write request. The term "write address" may refer to address and associated control metadata identifying a destination location and attributes for a write operation, which the circuit associates with corresponding data prior to packetization. The term "write data" may refer to the payload bytes of a write operation conveyed on a data channel, for example beats with a fixed length or a variable length that the circuit pairs with a write address before inclusion in a packetized transaction. The term "align write address and write data" may refer to associating the address/control phase and the data phase of a write so that, despite independent channel timing, the circuit forms a coherent transaction boundary prior to packetization, thereby preserving the host's pairing semantics across the network.

In some embodiments, the circuit may maintain one or more per-channel transmit queues. The term "per-channel transmit queues" may refer to queue structures maintained by the circuit for respective channels so that transactions are staged, ordered, and rate-matched before packetization, allowing continued progress on channels with available capacity even when another channel experiences temporary backpressure.

In some embodiments, the circuit may be configured to perform credit-based flow control per channel between a sender and a receiver of one or more transactions. The sender (e.g., host device) may decrement a credit counter upon issuing a transaction and the receiver (e.g., Ethernet subsystem) may return a credit to the sender when the buffer resource (e.g., memory buffer) which was consumed by the transferred transaction is freed. The term "credit" may refer to a permission token representing the receiver's available buffering for a given channel, where the sender consumes a credit when issuing a transaction and regains it when the receiver signals acceptance into its buffers. The term "credit based flow control per channel" may refer to a closed-loop admission mechanism applied independently to each channel, ensuring that transaction injection aligns with receiver capacity and that congestion on one channel does not stall unrelated channels that retain credits. The term "credit counter" may refer to a bounded counter maintained at the sender per channel that tracks available credits and gates issuance of additional transactions until credits are returned from the receiver.

In some embodiments, the circuit may be configured to perform end-to-end integrity check on each of the first Ethernet packet and the second Ethernet packet using an end-to-end cyclic redundancy check (ECRC) to protect at least payload of each packet across the Ethernet network. The term "end-to-end integrity check" may refer to validation performed by the circuit such that packet payloads carrying transaction content are protected across the Ethernet network independently of link-local FCS, with verification occurring at the ultimate receiver prior to depacketization into host-visible channels. The term "end-to-end cyclic redundancy check (ECRC)" may refer to a trailer value computed over the transaction payload of an Ethernet packet and appended for end-to-end verification, enabling detection of corruption that may occur anywhere along the path and supporting payload-level protection for both requests and responses.

In some embodiments, the circuit may be configured to aggregate a plurality of memory transactions destined to a common endpoint into a single Ethernet packet up to a configurable packet size threshold. The term "endpoint" may refer to a source or destination device identifiable in transport metadata and capable of originating or consuming packets that correspond to memory transactions, including but not limited to host devices or remote peers addressed by configured identifiers. The circuit may not split a single transaction across a plurality of Ethernet packets.

In some embodiments, a device may include a network interface and a circuit coupled to the network interface. The term "network interface" may refer to circuitry that couples the device to a packet-switched network and is operable to send and receive a plurality of packets, including carrying transaction content with transport metadata such as sequence numbers and acknowledgements. The circuit may be configured to send, via the network interface, a plurality of packets. The term "plurality of packets" may refer to multiple Ethernet frames emitted or received by the circuit in association with one or more memory transactions, where each packet can include transport fields for sequencing and reliability and may co-pack several transactions up to a configured threshold. Each packet may correspond to one or more memory transactions and include a respective packet sequence number (PSN). The term "packet sequence number (PSN)" may refer to a sequence value inserted into a transport header for each packet to support ordered delivery and reliability, allowing receivers to distinguish in-order packets from out-of-order events and enabling cumulative acknowledgement behavior.

In some embodiments, the circuit may be configured to receive, via the network interface, a first packet from an endpoint. The circuit may be configured to determine a first expected packet sequence number (EPSN) of the first packet and a first PSN included in the first packet. The term "expected packet sequence number (EPSN)" may refer to receiver state that tracks the next PSN anticipated for correct in-order progression, which is advanced upon reception of an in-order packet and communicated in acknowledgements to inform the sender's reliability logic. In response to determining that the first EPSN is equal to the first PSN, the circuit may be configured to update the first EPSN to a second ESPN, and send, via the network interface, to the endpoint, an acknowledgement (ACK) message identifying the second EPSN and indicating the first packet is an in-order packet. The term "acknowledgement (ACK) message" may refer to a control message sent toward the sender that identifies an updated EPSN and indicates that one or more packets up to a particular sequence have been received in order, thereby enabling the sender to release associated buffering. The term "in-order packet" may refer to a received packet whose PSN matches the current EPSN, prompting acceptance, EPSN advancement, and generation of acknowledgement information that may be included in a dedicated ACK message or piggybacked on reverse-path traffic. In response to determining that the first ESPN is not equal to the first PSN, the circuit may be configured to send, via the network interface, to the endpoint, a negative acknowledgement (NACK) message identifying the first EPSN and indicating the first packet is an out-of-order packet. The term "negative acknowledgement (NACK) message" may refer to a control message that identifies the current EPSN when a received packet's PSN does not match that EPSN, signaling a gap and prompting the sender to retransmit starting from the missing sequence.

In some embodiments, the respective PSN may be included in a reliable transport header of each header. The term "reliable transport header" may refer to a header carried within each packet that conveys fields supporting reliability and routing semantics, such as PSN and EPSN values and endpoint identification, allowing the receiver and sender to coordinate ordered delivery and acknowledgements. In some embodiments, in response to determining that the first ESPN is not equal to the first PSN, the circuit may be configured to drop the first packet, increment a sequence error counter, and send the NACK to the endpoint. The term "sequence error counter" may refer to a counter incremented when a PSN does not match the current EPSN, providing software-visible telemetry of sequencing anomalies observed during reception and facilitating diagnostics of network conditions or endpoint behavior. The term "dropping a packet" may refer to the receiver's choice not to accept a packet into depacketization or host-visible queues, for example when an ECRC integrity check fails or when the PSN is not equal to the current EPSN, with the receiver optionally recording the event and issuing a NACK.

In some embodiments, the circuit may be configured to receive a second ACK message identifying an EPSN that is greater than PSNs of multiple previously transmitted packets. The circuit may be configured to free one or more buffers associated with one or more implicitly acknowledged packets. The term "buffers" may refer to storage resources maintained by the circuit for staging transaction content at various pipeline points, including deeper packed storage associated with packet formation and retransmission, which may be freed upon acknowledgement of covered sequences. The term "implicitly acknowledged packets" may refer to transmitted packets that are treated as acknowledged when a received ACK conveys an EPSN greater than their PSNs, thereby allowing the circuit to release buffers for multiple earlier packets without receiving individual per-packet confirmations.

In some embodiments, the circuit may be configured to receive multiple in-order packets. The circuit may be configured to determine a particular EPSN using a maximum PSN of the multiple in-order packets. The circuit may be configured to send a single ACK message identifying the particular EPSN and indicating the multiple in-order packets.

In some embodiments, the circuit may be configured to protect payload associated with each packet using an end-to-end CRC (ECRC) check by dropping a packet failing the ECRC check. In some embodiments, the circuit may generate a NACK message if an out of order packet is received (e.g., received PSN is not equal to EPSN).

In some embodiments, the circuit may be configured to prioritize transmission of ACK messages and NACK messages above transmission of data packets. The term "prioritizing transmission" may refer to scheduling behavior in which the circuit elects to send control messages, such as ACK or NACK messages, ahead of data packets under certain conditions so that reliability feedback proceeds with minimal delay and sender-side buffers can be reclaimed promptly.

In some embodiments, a method may include sending, by a circuit, via a network interface, a plurality of packets. Each packet may correspond to one or more memory transactions and include a respective PSN. The method may include receiving, by the circuit, via the network interface, a first packet from an endpoint. The method may include determining, by the circuit, a first EPSN of the first packet and a first PSN included in the first packet. The method may include in response to determining that the first EPSN is equal to the first PSN, updating, by the circuit, the first EPSN to a second ESPN, and sending, via the network interface, to the endpoint, an acknowledgement (ACK) message identifying the second EPSN and indicating the first packet is an in-order packet. The method may include in response to determining that the first ESPN is not equal to the first PSN, sending, by the circuit, via the network interface to the endpoint, a negative acknowledgement (NACK) message identifying the first EPSN and indicating the first packet is an out-of-order packet. The term "out-of-order packet" may refer to a received packet whose PSN differs from the current EPSN, which the receiver may drop and report via a NACK while maintaining EPSN at the expected value to preserve strict ordering semantics.

Embodiments in the present disclosure have at least the following advantages and benefits. First, embodiments in the present disclosure can provide an apparatus that transports memory transactions over an Ethernet network, providing the advantage of enabling high-throughput, deterministic handling of multi-channel memory semantics across a packet-switched fabric. By transforming AXI-style request and response flows into compact Ethernet packet payloads, the device allows a host subsystem to issue write addresses, write data, read requests, and corresponding responses through a familiar multi-channel interface while relying on a packetization engine that preserves transaction boundaries, ordering, and correlation across the network. This approach enables the use of conventional bus-level semantics at the host side while leveraging the scalability and reach of high-speed Ethernet interfaces, including support for link-level capabilities such as priority-based flow control and link-level replay, thereby allowing remote endpoints to behave as extensions of the host's memory space even when separated by large physical distances.

Second, embodiments in the present disclosure can provide per-packet reliability mechanisms may provide the advantage of robust end-to-end correctness despite loss, corruption, or reordering that may occur in a best-effort Ethernet fabric. Through use of PSNs carried in a reliable transport header, together with receiver-maintained expected sequence state and ECRCs applied to transaction payloads, the device is capable of identifying both in-order and out-of-order packets, generating ACKs or NACKs as appropriate, and discarding corrupted or out-of-order packets before they reach host-visible channels. This improves operational predictability, as packets are validated against ECRC protection and strict sequencing rules before being accepted, ensuring that the host only receives correctly ordered completions for memory read and write operations while the device autonomously manages retransmission triggers and acknowledgment coalescing.

Third, embodiments in the present disclosure can incorporate per-channel credit-based flow control and packet aggregation policies which may provide the advantage of efficient utilization of both interface bandwidth and internal buffering resources. By applying a credit loop per transaction channel, the circuit regulates issuance of requests and responses so that the sender injects only as many in-flight operations as the receiver can buffer, preventing overruns while allowing uncongested channels to progress independently of those experiencing backpressure. In addition, the ability to aggregate multiple transactions destined for a common endpoint into a single Ethernet packet up to a programmable threshold increases wire efficiency by reducing header overhead and optimizing use of the network datapath, while avoiding splitting any individual transaction across packets ensures atomicity and simplifies both integrity checking and depacketization logic. These combined behaviors contribute to predictable throughput, reduced head-of-line blocking, and better arbitration efficiency across virtual channels and traffic classes.

With the foregoing in mind, the figures and description below illustrate various examples of the techniques for Ethernet-based load-store systems that provide reliable transport of memory transactions between computing endpoints. The figures and description below are non-limiting examples and can be implemented as any of various other configurations while remaining within the scope of the present disclosure. Other embodiments can be used in addition or instead. Details that can be apparent to a person of ordinary skill in the art may be omitted. Some embodiments can be practiced with additional components or steps and/or without all of the components or steps that are described.

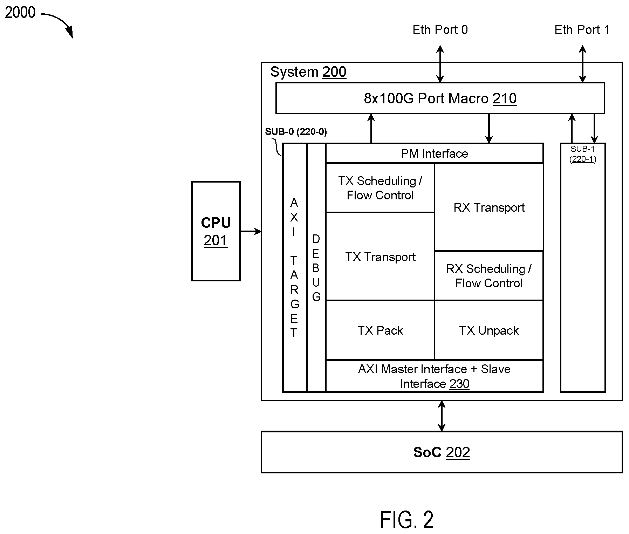

FIG. 2 illustrates an example system environment 2000 in which an Ethernet-based load-store system 200 integrates a system-on-chip (SoC) 202 with one or more transport subsystems 220-0, 220-1, according to some embodiments. The Ethernet-based load-store system 200 may integrate the SoC 202 with a transport subsystem 220-0, 220-1 to provide a 400-gigabit-per-second (400G) Ethernet network interface controller (NIC) for reliable transport of memory read and write transactions among up to one hundred twenty-eight endpoints within a single-tier network. FIG. 2 shows a central processing unit (CPU) 201 coupled, via a port-macro interface, to an eight-by-one-hundred-gigabit (8×100G) Ethernet PHY 210 that implements MAC and/or PCS functions and exposes two Ethernet ports (e.g., Eth Port 0, Eth Prot 1), enabling two system instances to share a single Ethernet PHY. Within the transport subsystem, FIG. 2 identifies transmit (TX) transport and receive (RX) transport pipelines as well as TX scheduling and flow control and RX scheduling and flow control blocks, along with TX pack and TX unpack functions that assemble and disassemble packet payloads. Host-side connectivity is provided by Advanced eXtensible Interface (AXI) datapath master and slave interfaces for moving request and response transactions, an AXI target interface for configuration and status access, and a debug interface for observability and bring-up. The TX path packs one or more AXI memory transactions into reliable-transport packets that may contain zero or more transactions protected with end-to-end integrity checks and the RX path performs complementary parsing, verification, and delivery of transactions back to the SoC.

In some embodiments, ordered delivery of memory transactions may be maintained per channel between a source system and a destination system using a transport protocol that employs PSNs, expected sequence tracking, and acknowledgment (ACK) or negative acknowledgment (NACK) signaling. Packets may be delivered to the destination using a delivery header that is interpreted by an intervening switch. The system 200 can be configured to use either (1) an optimized, non-standard packet delivery header format called an Artificial Intelligence Fabric Header (AFH) which reduces protocol overhead, or (2) a larger, standards-based Layer 2, Internet Protocol version 4, and User Datagram Protocol (L2-IPv4-UDP) header format, which is less efficient while retaining a standards-compliant option. Two virtual channels (VCs) are supported and mapped to separate lossless flow control classes to achieve deadlock avoidance and performance isolation, and a proprietary credit-based flow control interface is applied per AXI channel and per VC at the SoC boundary. On the Ethernet side, the interface supports Priority Flow Control (PFC) and Ultra Ethernet Consortium (UEC) credit-based flow control (CBFC) on a per-VC basis. The Ethernet port further supports Link Level Replay (LLR), which retries packets at the link level when a transmission failure is detected and thereby reduces, but does not eliminate, the need for system-level retransmission. In the embodiment illustrated in FIG. 2, two subsystems are integrated with the 8×100G Ethernet PHY that provides the MAC/PCS interface, and the block diagram explicitly shows two subsystems (or instances) SUB-0 (220-0) and SUB-1 (220-1), the AXI datapath master and slave interfaces, the AXI target interface, the debug interface, and the two Ethernet ports labeled "Eth Port 0" and "Eth Port 1."

**Table 1. Example System Settings**

| CATEGORY | Setting |
|---|---|
| Network | 400Gbps Ethernet Interface |
| | 400 Gbps Max Throughput |
| | 256B TX Line rate streaming packets at 400G |
| | 64B RX Line rate streaming packets at 400G |
| | • Optimized Delivery Header (referred to as "AFH") |
| | • L2-IPv4-UDP Header |
| | • PFC flow control (IEEE 802.1Qbb) |
| | • CBFC flow control (UEC 1.0) |
| | 2 Classes of service (VCs) |
| | 128 Endpoints |
| | 4.5KB MTU |
| Compute Interface | • One AXI Master Interface |
| | • One AXI Slave Interface |
| | Per interface/channel credit based flow control |
| Buffering | 1.25MB transmit buffer (total) |
| | 170KB receiver buffer (per VC) |
| Packing | 4KB max target Ethernet packet size |
| Transport | Reliable Go-back-N |
| | Invariant CRC end-to-end payload protection |
| | Fixed window congestion control |
| Ethernet Port Scheduling | Weighted Deficit Round Robin scheduler across VCs |
| | Port level shaping |
| system-to-SoC Channel Scheduling | Weighted Deficit Round Robin scheduler across VCs |
| End to End latency | <200ns fall through TX+RX latency inclusive of Ethernet PHY |

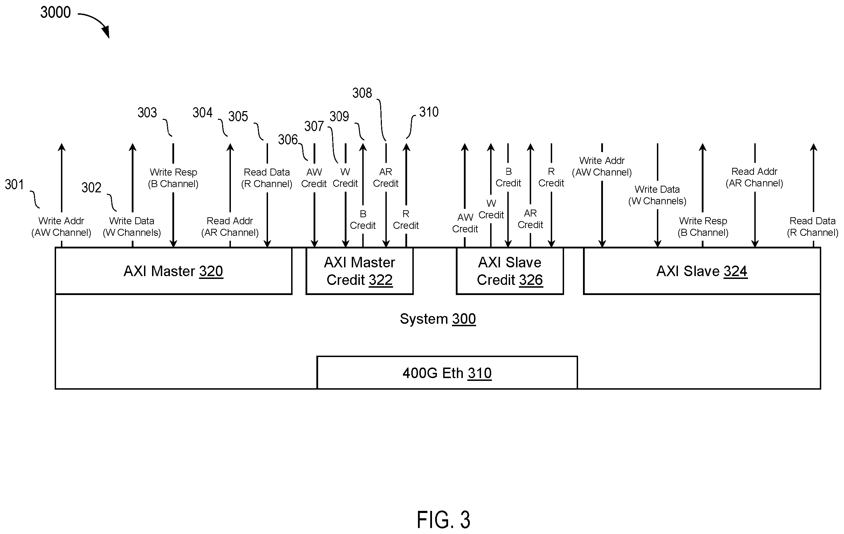

FIG. 3 is a diagram 3000 illustrating datapaths and associated credit loops in an Ethernet-based load-store system 300, according to some embodiments. FIG. 3 illustrates, for a single 400G Ethernet port, an Advanced eXtensible Interface version 4 (AXI4) datapath and the associated credit loops that couple a SoC to an Ethernet-based load-store system 300, with write-address, write-data, write-response, read-address, and read-data channels shown explicitly together with their corresponding credit-return signaling in both the SoC-to-system direction and the system-to-SoC direction. In this embodiment, the system provides an AXI4 slave interface and an AXI4 master interface 320 that each operate at a one-gigahertz AXI datapath clock (AXI_DP_CLK) for the 400G Ethernet interface, and FIG. 3 depicts the five AXI4 channels, namely the write-address channel (AW) 301, the write-data channel (W) 302, the write-response channel (B) 303, the read-address channel (AR) 304, and the read-data channel (R) 305, routed between the SoC and the system across that clock domain. The read and write datapaths use five-hundred-twelve-bit data buses so that the W channel and the R channel carry five-hundred-twelve-bit data beats. In some embodiments, transfers may have a burst length of two beats per transaction, which yields fixed one-hundred-twenty-eight-byte transfers on the AXI datapath. In some embodiments, variable sized bursts may be transferred, e.g., variable sized bursts including N 128B transfers (N is a positive integer) with a max of 2KB of total data.

FIG. 3 further shows that each AXI4 channel on both the AXI4 master side 320 and the AXI4 slave side 324 is associated with a separate credit interface (e.g., master credit interface 322, slave credit interface 326), where credits flow from the receiving side back to the sending side to regulate ingress rate and to prevent overflow of the downstream interface buffers. In particular, FIG. 3 indicates discrete credit signaling for the write-address, write-data, read-address, write-response, and read-data channels in each direction, which corresponds to per-channel credit lines such as AW credit 306, W credit 307, AR credit 308, B credit 309, and R credit 310 that return credits as space is freed at the receiver. This per-channel, per-direction credit mechanism is sized to cover round-trip latency and is applied independently on every AXI4 master channel and every AXI4 slave channel so that the SoC can throttle or accept traffic on a channel-granular basis. In the arrangement shown in FIG. 3, request traffic, which includes read-address transactions and write-address and write-data transactions, is mapped to a first virtual channel, and response traffic, which includes write-response transactions and read-data transactions, is mapped to a second virtual channel, so that ordering is maintained per channel while lossless flow control and deadlock avoidance are achieved across the interface. Taken together, the one-gigahertz AXI_DP_CLK, the five AXI4 channels, the fixed five-hundred-twelve-bit data width with two-beat bursts, and the separate credit interfaces associated with each AXI4 master and slave channel that are depicted in FIG. 3 cooperate to enable deterministic and ordered transport of memory transactions at the line rate of the 400G Ethernet port.

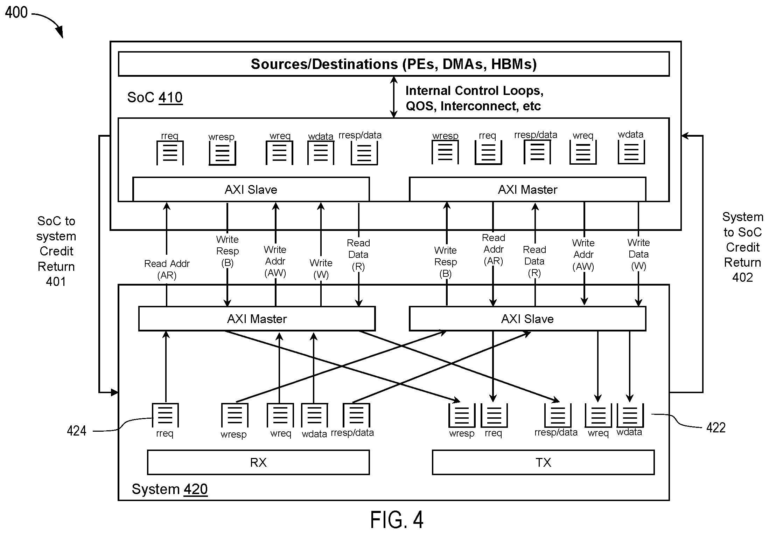

FIG. 4 is a diagram 400 illustrating datapath connectivity for interfaces between SoC logic 410 and an Ethernet-based load-store system 420, according to some embodiments. FIG. 4 also illustrates the associated interface buffering, functional partitioning, and virtual-channel (VC) mapping that are applied per channel. The SoC logic 410 may have different types of endpoint components as source or destination (e.g., processing element (PE), direct memory access (DMA) engines, high-bandwidth memory (HBM) controllers, etc.). In FIG. 4, AXI transactions are shown as request traffic, which comprises read-address (AR), write-address (AW), and write-data (W) transactions, and response traffic, which comprises write-response (B) and read-data (R) transactions; requests are mapped to a first virtual channel identified as VC0, and responses are mapped to a second virtual channel identified as VC1, thereby preserving ordering and providing isolation between request and response flows. The system instantiates, at the AXI interface boundary, per-channel interface buffers that store "unpacked" AXI transactions, and FIG. 4 visually associates these buffers with VC0 or VC1 to indicate their request-or response-class membership; these interface buffers are relatively small and are distinct from the larger "packed" data buffers that reside deeper in the transmit (TX) and receive (RX) datapaths. In some embodiments, the system 420 may maintain one or more per-channel transmit (TX) queues 422 and/or one or more per-channel receive queues 424. In some embodiments, additional queues per channel can be used to support differentiated classes of service.

FIG. 4 further shows that the SoC provides corresponding per-channel buffers proximate to the system in order to keep buffer depths shallow and to maintain independence from SoC architectural variations; in this arrangement, buffers that receive transactions from the system, namely the AXI master AR, AXI master AW, AXI master W, AXI slave B, and AXI slave R directions, return 401 credit back toward the system as space is freed, while buffers that send transactions into the system, namely the AXI master B and AXI master R as well as the AXI slave AR and AXI slave AW directions, track available credit by decrementing a credit counter for each transaction sent and incrementing the counter for each returned credit (which is returned 402 by the system towards the SoC). Within the system, the compute-to-system channel interfaces are organized into two functional groups: a control group that includes write-response and read-request traffic, and a control/data group that includes read-response with data and write-request with write-data traffic; although write-request (AW) and write-data (W) use distinct channels as required by AXI4, transactions across these two channels are paired and arrive in the same order, and the system aligns each pair at the heads of their respective interface buffers before moving them forward into the TX datapath as a single unit.

FIG. 4 also depicts the bandwidth constraint that governs the rate at which the TX datapath can accept incoming work from the AXI side. Specifically, the TX datapath partitions the incoming channels into two groups, a control group consisting of the B and AR channels, and a control/data group consisting of the R channel and the combined AW/W channels; the TX datapath can sink at most one control transaction and one control/data transaction every two interface clock cycles, and each group is arbitrated by a work-conserving round-robin arbiter that makes a selection at most once every two clocks. When the aggregate arrival rate for any group exceeds this acceptance rate, the interface buffers in FIG. 4 back up and assert per-channel interface-level flow control, implemented via the credit loop mechanism described elsewhere, which in turn causes AXI transactions to accumulate in the SoC's per-channel buffers until credits return.

FIG. 4 shows how per-channel unpacked buffering at the interface, SoC-side per-channel buffering with explicit credit return and credit accounting, VC0 and VC1 mapping of request and response traffic, alignment of paired write-address and write-data operations prior to TX injection, and the dual-arbiter bandwidth model integrate to regulate ingress into the TX datapath while maintaining ordered delivery semantics and isolating control and control/data flows.

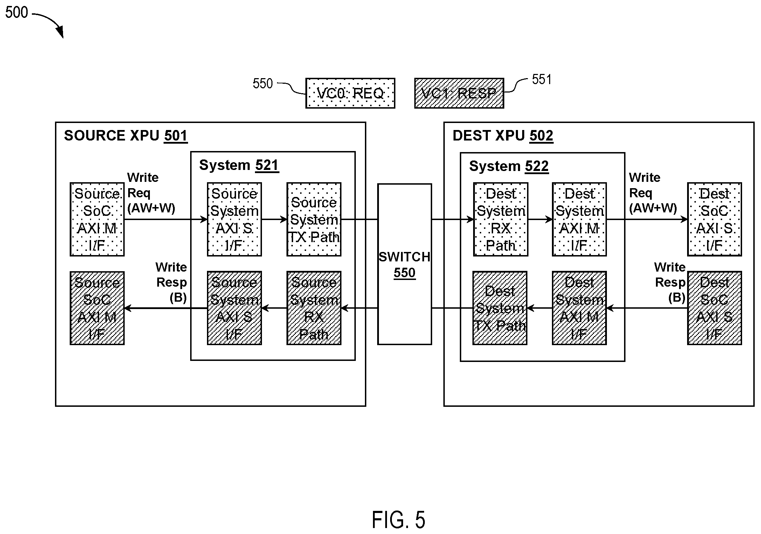

FIG. 5 is a diagram 500 illustrating interfaces that carry request and response transactions between a source endpoint 501 and a destination endpoint 502, according to some embodiments. FIG. 5 illustrates the AXI4 interfaces that carry request transactions between the source endpoint 501 and the destination endpoint 502 through a first virtual channel identified as VC0 550. The source endpoint 501 may include a SoC coupled to an Ethernet-based load-store system 521 that implements the reliable network transport. Similarly, the destination endpoint 502 may include a SoC coupled to an Ethernet-based load-store system 522 that implements the reliable network transport. FIG. 5 also illustrates the AXI4 interfaces that carry response transactions between the source endpoint 501 and the destination endpoint 502 through a second virtual channel identified as VC1 551.

In the write flow depicted in FIG. 5, SoC logic at the source endpoint issues a write request on its AXI4 master interface toward the system's AXI4 slave interface, after which the request is packetized in the source system's transmit datapath, forwarded through a switch, received and unpacked by the destination system's receive datapath, and then presented on the destination system's AXI4 master interface into the destination SoC's AXI4 slave interface. The write response returns in the reverse direction from the destination SoC toward the source SoC so that the response traverses the destination system's transmit datapath, the switch, and the source system's receive datapath before being delivered on the response channel of the source SoC's AXI4 master interface. Throughout this write transaction, request traffic is carried end-to-end on a first virtual channel identified as VC0 and response traffic is carried in the opposite direction on a second virtual channel identified as VC1, which preserves ordered delivery semantics per channel while enabling class-based, lossless flow control across the network path.

FIG. 5 also indicates that the same interface relationships apply to read operations, with the read-address channel serving as the request path and the read-data channel serving as the response path. In particular, a read request originates from the source SoC on the AXI4 read-address channel, is injected into the source system's AXI4 slave interface, and follows the same source transmit datapath, switch, and destination receive datapath sequence before being issued by the destination system's AXI4 master interface into the destination SoC. The corresponding read data then returns from the destination SoC to the source SoC, using the destination system's transmit datapath, the switch, and the source system's receive datapath, and is delivered on the AXI4 read-data channel at the source. Consistent with the write case, the read-address request is mapped to VC0 and the read-data response is mapped to VC1 in FIG. 5, thereby maintaining the request-on-VC0 and response-on-VC1 mapping across the end-to-end path between endpoints.

In combination, FIG. 5 depicts that requests originate at the AXI4 master interface of the source SoC, enter the source system's AXI4 slave interface, traverse the source transmit datapath, the intervening switch, and the destination receive datapath, and are delivered to the AXI4 master interface of the destination system for consumption by the destination SoC, while the corresponding responses traverse the reverse path and return to the response channel of the source SoC's AXI4 master interface, with virtual channel VC0 assigned to all request traffic and virtual channel VC1 assigned to all response traffic for both writes and reads.

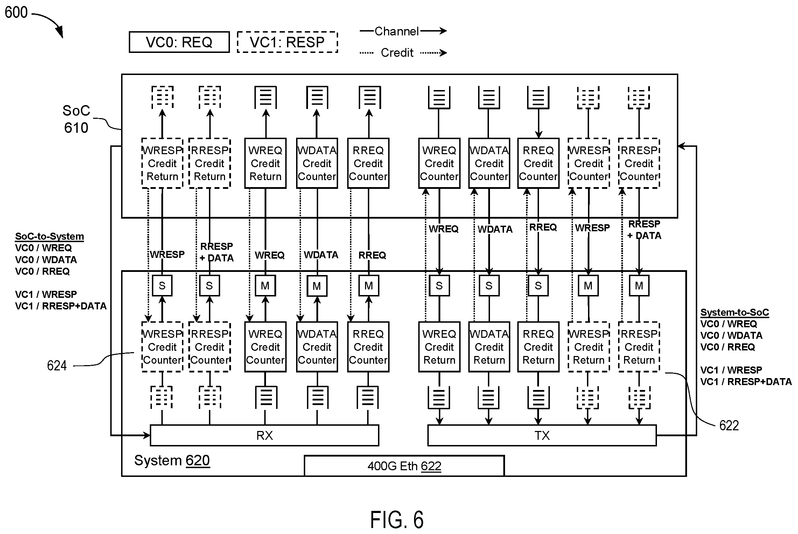

FIG. 6 is a diagram 600 illustrating credit loops established between an SoC 610 and an Ethernet-based load-store system 620 which includes an Ethernet interface 622, according to some embodiments. FIG. 6 also depicts credit-return logic, credit-counter logic, and the associated interface buffers reside in relation to the transmit (TX) and receive (RX) datapaths and to the VC partitioning. In FIG. 6, credits are partitioned per AXI4 channel so that each discrete credit represents one transaction for its corresponding channel, and FIG. 6 shows the receive-side credit-return logic co-located with the per-VC RX buffers while the sender-side credit counters are co-located with the per-VC TX buffers. FIG. 6 also presents the AXI4 master and AXI4 slave channel groups separated and aligned with the RX and TX datapaths, respectively, which is a diagrammatic convention to make the directions of transaction flow and the corresponding credit-return paths visually clear.

As shown in FIG. 6, the credit loops perform flow control on traffic entering the system for two complementary purposes. First, the credit mechanism provides rate adaptation where SoC-to-system channels could otherwise oversubscribe the maximum acceptance rate of the TX datapath; by limiting sends to available credits, the input rate is automatically bounded to what the TX pipeline can sink without overrun. Second, the credit mechanism prevents overflow of the downstream packed TX buffer that stores packet payload in queues indexed by endpoint and VC; because TX buffer space is provisioned with a fixed allocation per VC, returning credits only as space is actually freed ensures the SoC does not inject additional transactions that would exceed the buffer capacity.

FIG. 6 further reflects that each credit loop is dimensioned to span the round-trip time between the sender and receiver across the interface. A complete loop comprises sending a transaction and decrementing the sender's credit counter, receiving and storing the transaction at the receiver, dequeuing the transaction for forward progress, returning a credit from the receiver, and finally receiving that returned credit at the sender and incrementing the sender's counter. To maintain full-rate operation over this round-trip interval, the sender is initialized with sufficient credits to keep the pipeline full until credits begin returning. In the illustrated embodiment, the system supports a maximum of one hundred twenty-eight credits per channel, which accommodates approximately one hundred twenty-eight nanoseconds of round-trip latency at a one-gigahertz AXI datapath clock (AXI_DP_CLK), inclusive of signal flight time and the internal credit-processing latencies within both the SoC and the system.

FIG. 6 shows per-channel credit return from the receive side to the transmit side, placement of receive-side credit-return logic with the per-VC RX buffers and sender-side credit counters with the per-VC TX buffers, explicit alignment of AXI4 master and AXI4 slave channel groups with RX and TX datapaths for clarity, and sizing of the credit pools to the target round-trip time so that ingress traffic is rate-matched to the TX datapath and protected against packed-buffer overflow under the fixed per-VC allocation model. In some embodiments, the system 620 may include one or more per-channel credit counters 624 (which can be decremented or incremented), and/or one or more per-channel credit returns 622 (which can return credits towards the SoC 610).

**Table 2. AXI Credit Loops Return**

| CHANNEL | CREDIT SIGNAL NAME | CH DIR | CREDIT DIR | system I/F | NOTES |
|---|---|---|---|---|---|
| WRITE REQ | E2S_AWCREDIT | SoC to system | system to SoC | AXI SLAVE | Write address/control/metadata |
| WRITE DATA | E2S_WCREDIT | | | AXI SLAVE | Write data |
| READ REQUEST | E2S_ARCREDIT | | | AXI SLAVE | Read address/control/metadata |
| WRITE RESPONSE | E2S_BCREDIT | | | AXI MASTER | Write ack/metadata |
| READ RESPONSE | E2S_RCREDIT | | | AXI MASTER | Read ack/metadata + data |
| N/A | E2S_READY | | | N/A | |
| WRITE ADDRESS | S2E_AWCREDIT | system to SoC | SoC to system | AXI MASTER | Write address/control/metadata |
| WRITE DATA | S2E_WCREDIT | | | AXI MASTER | Write data |
| READ REQUEST | S2E_ARCREDIT | | | AXI MASTER | Read address/control/metadata |
| WRITE RESPONSE | S2E_BCREDIT | | | AXI SLAVE | Write ack/metadata |
| READ RESPONSE | S2E_RCREDIT | | | AXI SLAVE | Read ack/metadata + data |
| N/A | S2E_READY | | | N/A | |

Table 2 shows a one bit interface per channel which is used to return credits. Each channel's receive side logic may drive this signal into the sender. When this signal is set, one credit may be returned to the sender, which in turn will increment its credit counter.

In some embodiments, credit initialization is carried out through a hardware protocol in which the receive side of each AXI channel assigns the initial credits to the send side only after both ends of the interface have exited reset and have indicated readiness to process traffic. The SoC asserts an S2E_READY signal to indicate it is out of reset and ready to send or receive transactions, while the Ethernet-based load-store system asserts E2S_READY for the same purpose. Because the SoC and the system may come out of reset at different times, credit distribution does not begin until mutual readiness is observed. When reset is active, the sender's credit counter is cleared to zero, and after reset deassertion the receiver temporarily holds the entire credit pool for that channel.

In some embodiments, once the receiver has completed its internal initialization, it enables its receive logic, asserts readiness, and begins transferring credits from its credit return pool to the sender through the per-channel credit-return interface as soon as it detects the sender's readiness. During this interval, the sender remains enabled but holds its credit counter at zero until returned credits begin to arrive. Every credit represents permission to transmit exactly one AXI transaction, so as credits return, the sender increments its counter and begins issuing transactions paced by the receiver's available buffering capacity. This mechanism applies uniformly to write-address (AW), write-data (W), read-address (AR), write-response (B), and read-data (R) channels, ensuring that no transaction is transmitted before the receiver can safely accept it.

In some embodiments, the credit loops are dimensioned to cover the expected round-trip time (RTT) between the sender and receiver, including the time to send a transaction, store it at the receiver, forward it downstream, return a credit, and process that returned credit at the sender. To sustain full-bandwidth operation across this interval, the sender is initialized with sufficient credits to keep the pipeline full until credit returns begin circulating. The Ethernet-based load-store system supports one hundred twenty-eight credits per channel, which corresponds to approximately one hundred twenty-eight nanoseconds of RTT at a one-gigahertz AXI datapath clock (AXI_DP_CLK), including on-chip signal propagation and credit processing time within both the SoC and the system. This credit depth ensures that ingress traffic is automatically rate-matched to the transmit datapath and that downstream packed buffers cannot overflow.

In some embodiments, the AXI signaling used by the system is divided into AXI control bits and AXI data bits, where the control group contains address, metadata, and transaction-type information and the data group carries the fixed-size payload beats. In the Ethernet-based load-store system, these fields are treated as opaque, meaning the system does not interpret or modify most AXI fields but instead packs and transports them verbatim to the destination. Only a small subset of fields, such as those needed for transport functions (for example, the endpoint identifier used to select a destination or the control-type field used to determine the number of control bytes that may or must be packed), are examined or repurposed. All remaining AXI control and data bits are simply encapsulated within the packed-transaction format and reproduced at the destination AXI interface without alteration, preserving the original AXI semantics while enabling efficient, network-based delivery of memory transactions.

In some embodiments, the system accepts two classes of control information on the AXI boundary. The first class comprises transport control bits that accompany every transaction, are consumed by the system for packing and reliable-transport functions, and are also carried end-to-end. These include XPUID and xCTLTYPE. XPUID is a seven-bit endpoint identifier supplied by the SoC at the source to select the destination endpoint; before packing, the system remaps this value to a configured identifier so that, at the destination, the presented XPUID identifies the source endpoint rather than the destination. Thus, XPUID is intentionally asymmetric: at the source it points to the destination, and at the destination it points back to the source. xCTLTYPE is a two-bit control-type indicator that the system retains from source to destination so the receiving SoC can decode how many control bytes were packed for the transaction. Depending on SoC integration, these transport fields may be conveyed in AXI xUSER or other sideband fields.

**Table 3. System Input Control Fields**

| CONTROL | BITS | DESCRIPTION |
|---|---|---|
| XPUID | 7 | Addresses the destination XPU. |
| CTLTYPE | 2 | Type of AXI Control bus (system indexes into a lookup Table to determine number of valid bytes on bus). |

In some embodiments, the second class comprises opaque AXI control fields-such as address, cache attributes, and transaction identifiers-that the system does not interpret. These are carried on per-channel control buses named <CHANNEL_IDENTIFIER>CTL for the write-address (AW), write-response (B), read-address (AR), and read-data (R) channels. The write-data (W) channel has no separate control bus because it consists entirely of WDATA and inherits control from the associated AW transaction.

In some embodiments, per transaction, the system packs at most 18 bytes of control, consisting of up to 9 bits of transport control (XPUID plus CTLTYPE; see Table 3 above), up to 132 bits of opaque AXI control, and 3 bits of source channel type using a single type for the combined write-request/write-data path. The packed-control length is variable and selected in 2-byte increments from 2 bytes to 18 bytes by a configurable lookup table indexed by {channel_type[1:0], ctl_type[1:0]}, providing four preconfigured sizes per channel type across 16 entries. At the destination, the original xCTLTYPE accompanies the delivered transaction so the SoC can reconstruct the AXI mapping and interpret the opaque control bytes on the appropriate AXI signals exactly as transmitted.

In some embodiments, the system transfers AXI data exclusively through the standard AXI data buses, WDATA for write payloads and RDATA for read payloads, and imposes strict constraints on the size and structure of every data movement. In some embodiments, each AXI data transfer may be fixed at 128 bytes, and the AXI burst fields (AWBURST[1:0] for writes and ARBURST[1:0] for reads) may be required to indicate a burst length of two beats. Because the data buses are 512 bits wide, each beat carries 64 bytes, and the mandated two-beat burst therefore yields exactly one 128-byte transfer. These fixed-size, two-beat transfers ensure consistent packing and unpacking behavior inside the system and allow the transmit and receive datapaths to operate with predictable alignment and buffering rules, as described throughout the reliable-transport architecture in the original disclosure. In some embodiments, each data transfer may have a variable length.

Table 4 to Table 8 below define the interface signaling (AXI signaling) and packing for each channel.

**Table 4. Write Addr (AW) Interface Signaling And Packing**

| WRITE ADDR (AW) CHANNEL SIGNALS | AXI SLAVE I/F (SRC XPU/TX ) | | AXI MASTER I/F (DST XPU/RX) | | MAX PACKED BITS | NOTES |
|---|---|---|---|---|---|---|
| | BITS | DIR | BITS | DIR | | |
| AWVALID | 1 | I | 1 | O | 0 | Used on interface, not transferred |
| AWREADY | 0 | O | 0 | I | 0 | NOT USED |
| AWCTL | 132 | I | 132 | O | 132 | Packed (variable number of bits packed based on xTYPE) |
| AWXPUID | 7 | I | 7 | O | 7 | |
| AWCTLTYPE | 2 | I | 2 | O | 2 | |
| TOTAL I/F SIGNALS | 142 | | 142 | | N/A | |
| MAX INTERFACE PACKED BITS | | | | | 141 | Does not include 3-bit ch type |
| MAX PACKED BITS PER TRANSACTION | | | | | 144 | 18B max control payload |
| MAX PACKED BYTES PER TRANSACTION | | | | | 18 | |

**Table 5. Write Data (W) Interface Signaling And Packing**

| WRITE (W) CHANNEL SIGNALS | AXI SLAVE I/F (SRC XPU/TX ) | | AXI MASTER I/F (DST XPU/RX ) | | MAX PACKED BITS | NOTES |
|---|---|---|---|---|---|---|
| | BITS | DIR | BITS | DIR | | |
| WVALID | 1 | I | 1 | O | 0 | |
| WREADY | 0 | O | 0 | I | 0 | |
| WDATA | 512 | I | 512 | O | 1024 | 128B total (2x 64B transfer burst) |
| TOTAL I/F SIGNALS | 513 | | 513 | | | |
| MAX INTERFACE PACKED BITS | | | | | 1024 | |
| MAX PACKED BITS PER TRANSACTION | | | | | 1024 | 128B max data payload |
| MAX PACKED BYTES PER TRANSACTION | | | | | 128 | |

**Table 6. Write Response(B) Interface Signaling And Packing**

| WRITE RESP (B) CHANNEL SIGNALS | AXI SLAVE I/F (SRC XPU/RX ) | | AXI MASTER I/F (DST XPU/TX ) | | MAX PACKED BITS | NOTES |
|---|---|---|---|---|---|---|
| | BITS | DIR | BITS | DIR | | |
| BVALID | 1 | O | 1 | I | 0 | Used on interface, not transferred |
| BREADY | 0 | I | 0 | O | 0 | NOT USED |
| BCTL | 132 | O | 132 | I | 132 | variable # of bits packed based on size |
| BXPUID | 7 | O | 7 | I | 7 | |
| BCTLTYPE | 2 | O | 2 | I | 2 | |
| TOTAL I/F SIGNALS | 142 | | 142 | | N/A | |
| MAX INTERFACE PACKED BITS | | | | | 141 | Does not include 3-bit ch type |
| MAX PACKED BITS PER TRANSACTION | | | | | 144 | 18B max control payload |
| MAX PACKED BYTES PER TRANSACTION | | | | | 18 | |

**Table 7. Read Addr (AR) Interface Signaling And Packing**

| READ ADDR (AR) CHANNEL SIGNALS | AXI SLAVE I/F (SRC XPU/TX ) | | AXI MASTER I/F (DST XPU/RX ) | | PACKED BITS | NOTES |
|---|---|---|---|---|---|---|
| | BITS | DIR | BITS | DIR | | |
| ARVALID | 1 | I | 1 | O | 0 | Used on interface, not transferred |
| ARREADY | 0 | O | 0 | I | 0 | NOT USED |
| ARCTL | 132 | I | 132 | O | 132 | Packed (variable # of bits packed based on xTYPE) |
| ARXPUID | 7 | I | 7 | O | 7 | |
| ARCTLTYPE | 2 | I | 2 | O | 2 | |
| TOTAL I/F SIGNALS | 141 | | 141 | | N/A | |
| MAX INTERFACE PACKED BITS | | | | | 141 | Does not include 3-bit ch type |
| MAX PACKED BITS PER TRANSACTION | | | | | 144 | 18B max control payload |
| MAX PACKED BYTES PER TRANSACTION | | | | | 18 | |

**Table 8. Read Data (R) Interface Signaling And Packing**

| READ DATA (R) CHANNEL SIGNALS | AXI SLAVE I/F (SRC XPU/RX ) | | AXI MASTER I/F (DST XPU/TX ) | | PACKED BITS | NOTES |
|---|---|---|---|---|---|---|
| | BITS | DIR | BITS | DIR | | |
| RVALID | 1 | O | 1 | I | 0 | |
| RREADY | 1 | I | 1 | O | 0 | NOT USED |
| RCTL | 132 | O | 132 | I | 132 | Packed (variable # of bits packed based on xTYPE) |
| RXPUID | 7 | O | 7 | I | 7 | |
| RCTLTYPE | 2 | O | 2 | I | 2 | |
| RDATA | 512 | O | 512 | I | 1024 | 128B total (2x 64B transfer burst) |
| TOTAL I/F SIGNALS | 655 | | 655 | | N/A | |
| MAX INTERFACE PACKED BITS | | | | | 1165 | |
| MAX PACKED BITS PER TRANSACTION | | | | | 1168 | |
| MAX PACKED BYTES PER TRANSACTION | | | | | 146 | |

In some embodiments, the SoC maps its AXI4 signals into the interface fields exposed by the system on a per-channel basis. The xVALID and xDATA signals on the system interface are dedicated signals that correspond directly to the AXI4 VALID and DATA signals on the SoC side. All remaining AXI4 control fields are collected and encoded by SoC logic into three categories of system control inputs: xCTL, xXPUID, and xCTLTYPE. The xXPUID field, which identifies the communicating endpoint, is remapped by the system so that its meaning reverses between source and destination. At the source, the SoC provides an XPUID value that identifies the destination endpoint. After packing, the system replaces this value with a configured XPUID that the destination system presents to its SoC to identify the source endpoint. This remapping allows the same transaction header to serve both addressing and return-path routing. In contrast, the xCTLTYPE field is preserved unchanged from source to destination to indicate the number of control bytes packed for that transaction, ensuring that the receiving SoC can reconstruct the appropriate AXI control signals.

In some embodiments, the xCTL field contains opaque AXI control bits such as address, attribute, and identifier fields. These bits retain their AXI semantics but are not interpreted by the system and may be mapped from any AXI control signals chosen by the SoC. The system does not rely on AXI features that are incompatible with its fixed-burst model. Fields such as WLAST and RLAST are unused because the system transfers payloads as two fixed sixty-four-byte beats. Likewise, xSIZE and xLEN are ignored because burst size and transfer length are fixed and do not vary per transaction. Together, these mappings allow the system to preserve AXI transactional meaning while transporting all required control information in packed form across the network and reconstructing it faithfully at the destination.

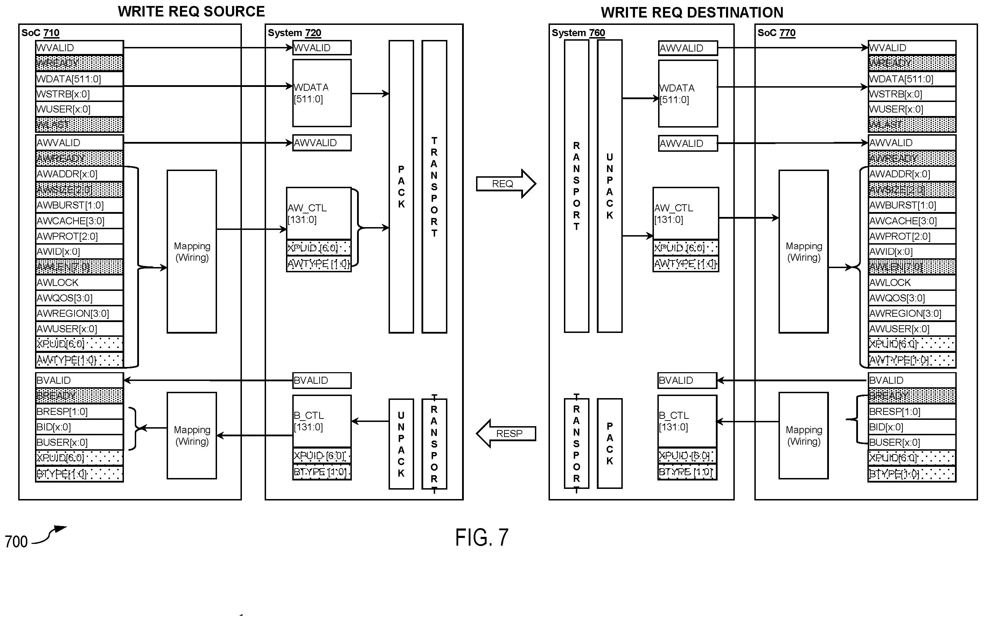

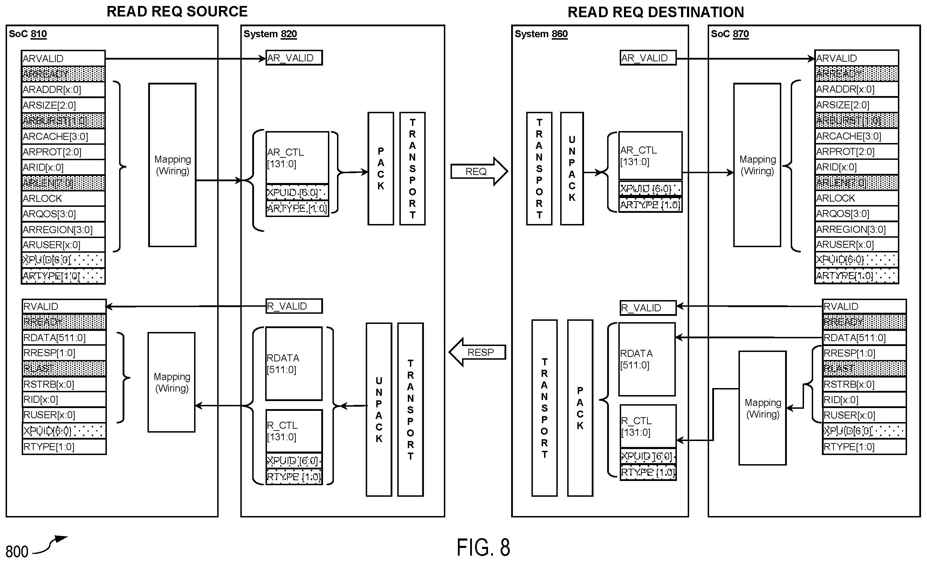

FIG. 7 and FIG. 8 illustrate, respectively, the write-request and write-response bit mapping and flow, and the read-request and read-response bit mapping and flow, between system-on-chip (SoC) logic and the Ethernet-based load-store system, showing how a generic AXI4 bus presented by the SoC is mapped into an internal control bus identified as xCTL for network transport and then mapped back to AXI4 at the destination. In each of FIG. 7 and FIG. 8, the SoC-side AXI4 signals are partitioned into control and data groupings, where the control fields are collected into the xCTL bus and the data fields remain on dedicated data paths, and gray-shaded fields denote AXI4 bits that the Ethernet-based load-store system does not support or consume. As depicted, the xVALID and xDATA signals are not remapped into xCTL and instead remain unmapped control strobes and data paths at the AXI4 boundary, consistent with the requirement that only control-plane metadata be packed into the transport header while data beats are handled on the dedicated write-data (W) and read-data (R) channels.

FIG. 7 is a diagram 700 illustrating write-request and write-response bit mapping and flow between SoC logic 710, 770 and Ethernet-based load-store systems 720, 760, according to some embodiments. In FIG. 7, the write flow begins when the source SoC 710 issues a write-address (AW) transaction and corresponding write-data (W) beats on its AXI4 master interface; the SoC logic maps the AW control fields into the xCTL bus according to a packing policy while the W data is presented as five-hundred-twelve-bit beats that are not folded into xCTL. The Ethernet-based load-store system 720 packs the xCTL control bytes and, when present, the data payload into a network packet for transmission, preserving ordering on a per-channel basis and associating the write request with the request virtual channel. At the destination, the receive path (e.g., Ethernet-based load-store system 760) unpacks the control bytes from the transport header back into the AXI4 control signals and forwards the data beats on the AXI4 data bus into the AXI4 slave interface of the destination SoC 770; the corresponding write-response (B) control returns along the reverse path and is mapped from the destination SoC's AXI4 interface back into xCTL for transport as a response virtual-channel packet. FIG. 7 and FIG. 8 emphasize that certain AXI4 fields are opaque to the Ethernet-based load-store system and are conveyed as packed control bytes without interpretation, while fields such as endpoint identity are used by the transport for routing and remapped between source and destination as described in the invention disclosure.

FIG. 8 is a diagram 800 illustrating read-request and read-response bit mapping and flow between SoC logic 810, 870 and Ethernet-based load-store systems 820, 860, according to some embodiments. In FIG. 8, the analogous mapping is shown for read traffic. The read-address (AR) control from the source SoC 810 is collected into xCTL and transmitted as a request-class packet, and the read-data (R) response from the destination SoC 870 is returned with its control on the AXI4 R channel and its data on the five-hundred-twelve-bit data bus as a response-class packet. FIG. 8 depicts an xTYPE field that the SoC 810 supplies to characterize the control-byte footprint for a given transaction type so that the Ethernet-based load-store system 820 can pack only the number of control bytes actually needed for that transaction, thereby optimizing on-wire overhead when a channel carries multiple transaction forms that use a subset of the AXI4 control fields or narrower encodings. In conjunction with this, the number of packed control bytes may be varied per channel type using a lookup indexed by the channel and control-type indication, with upper bounds on packed control size to ensure deterministic packing and unpacking across endpoints. This xTYPE-directed variability enables efficient transport when, for example, certain write requests do not require all identification and attribute fields, or when read responses can omit fields that are unnecessary for the destination to reconstruct the AXI4 semantics, while still preserving end-to-end ordering and integrity guarantees described for the reliable transport.

In some embodiments, the system integrates with an Ethernet PHY 8×100 (e.g., via 8 100G lanes), which provides two four-hundred-gigabit-per-second (2×400G) Ethernet interfaces compliant with Ultra Ethernet Consortium (UEC) 1.0. In this configuration, two instances of the system share a single 8×100 Ethernet PHY, allowing both to access its high-speed Ethernet ports.

In some embodiments, the 8×100 Ethernet PHY incorporates the complete physical-layer and link-layer feature set required for 400G Ethernet operation, including the MAC layer, the PCS, forward error correction (FEC), physical medium attachment (PMA), physical medium dependent (PMD) functions, and an analog front end (AFE). Each of the two 400G ports supports Link Level Replay (LLR) for link-level retransmission, Priority Flow Control (PFC) compliant with IEEE 802.1Qbb, and credit-based flow control (CBFC) defined by UEC 1.0. The 8×100 Ethernet PHY also supports lane swapping and polarity inversion under software control, which simplifies system-level board routing and layout.

In some embodiments, the system itself may operate with either PFC or UEC-compliant CBFC, and applies the selected flow-control mechanism per port and per virtual channel (VC). This per-VC granularity matches the system's internal use of separate lossless flow-control classes for request and response traffic, ensuring that end-to-end lossless behavior is preserved across the Ethernet link in accordance with the configured flow-control mode.

In some embodiments, each instance of the system exposes an AXI4 slave interface that the system-on-chip (SoC) uses for configuration and status access. This interface does not directly map internal registers or memories into the SoC address space. Instead, the system implements an indirect access mechanism, whereby software writes to a small set of externally visible registers that, in turn, address and access the system's internal register files and memory structures.

Table 9 below lists the target interface parameters.

**Table 9:. AXI Target Interface Parameters**

| Parameter | Description | Value |
|---|---|---|
| addr_width | Address width of the interface. | 28 |
| data_width | Data width of the interface. | 64 |
| awid_width | Width of the AWID signal that is used to identify write transactions. | 5 |
| arid_width | Width of the ARID signal that is used to identify read transactions. | 5 |
| reads | The interface will support up to 8 read requests outstanding at any one time. | 8 |
| writes | The interface will support up to 100 write requests outstanding at any one time. | 8 |
| total_trans | The interface will support up to 108 total read and write requests outstanding at any one time. | 16 |
| trust_zone | Value is one of the following: | non-secure |
| | Non-secure: All transactions across the interface are non-secure | |
| | Secure: All transactions across the interface are secure. | |

In some embodiments, each 400G port of the system provides a dedicated interrupt signal, and software can determine the cause of an interrupt through a corresponding set of interrupt status bits that are maintained per port. These status bits identify the specific event or condition that triggered the interrupt and allow system software to react appropriately. The system also provides software-configurable interrupt masking, enabling each interrupt source to be selectively enabled or suppressed so that only relevant events generate an external interrupt. In addition to the interrupts generated by the system itself, the Ethernet PHY 8×100 independently produces two interrupt outputs and maintains its own set of status bits. For integration simplicity, these port-macro interrupts are logically mapped into the interrupt signal of port 0, allowing software to process both system-level and port-macro-level interrupt conditions through a unified reporting mechanism.

In some embodiments, the system may receive 3 clocks from the SoC as shown in Table 10 below.

**Table 10. Clock Inputs**

| CLOCK | FREQUENCY | DETAILS |
|---|---|---|
| CORE_CLK | 1.35GHz | system core clock: clocks all internal logic |
| AXI_DP_CLK | 1.0GHz | AXI Datapath (system<>SoC> interface clock |
| AXI_TGT_CLK | 1.0GHz | Maximum clock frequency |

In some embodiments, the system relies on a single active-low reset signal, System_RESET_N, supplied by the system-on-chip (SoC) to reinitialize all logic within the Ethernet-based load-store system. When this reset signal is asserted, it clears and reinitializes every internal block, including the complete datapath for both four-hundred-gigabit-per-second (400G) ports, all system-to-SoC interface logic, the AXI target interface, and the integrated 8×100 Ethernet PHY (e.g., via eight 100G lanes), which contains the MAC, PCS, and other physical-layer components. This unified reset mechanism ensures that the entire subsystem, including the Ethernet PHY and all transport and packing logic, returns to a clean and deterministic state under SoC control.

In some embodiments, the Reliable Transport Header (RTH) is appended to every packet generated by the system and provides the control information required for reliable, lossless delivery of memory transactions between endpoints. In some embodiments, the RTH contains fields that identify the source and destination endpoint processors (XPUs), allowing the system to route packets correctly and enabling the destination to generate return traffic, including acknowledgments, to the originating XPU. The term "XPU" may refer to one or more compute devices encompassing CPUs, GPUs, DPUs, or other processing subsystems capable of issuing or receiving memory transactions (e.g., AXI-based memory transactions) over the network fabric. The header also carries a partition (also referred to as "global job identifier"), which allows packets to be associated with higher-level operations or workloads across the fabric. In addition, the RTH embeds all information required for the system's acknowledgment (ACK) and negative-acknowledgment (NACK) protocol, including the PSN and the EPSN. These fields allow the receiver to determine whether packets have arrived in order and to signal the sender when a retransmission is needed. Together, the RTH fields enable the system to implement its end-to-end reliable transport mechanism, ensuring ordered delivery, loss detection, and retransmission across the Ethernet fabric.

**Table 11. Reliable Transport Header Format**

| Field | Size | Description |
|---|---|---|
| VER | 2 | Version field set to 0 |
| OP | 2 | Piggybacked control type 0b00 = NOP |
| | | 0b01 = ACK |
| | | 0b10 = NACK |
| | | 0b11 = reserved (NOP) |
| PARTITION | 10 | Multi-tenant isolation. Ensures packet is only sent to receiver's SoC, if it's a member of the same partition. (globally configured) |
| PSN | 20 | Packet sequence number |
| ESPN | 20 | Expected Packet sequence number (ACK/NACK) |
| XPUID | 10 | Destination XPU's ID |
| VC | 2 | Virtual Channel |

In some embodiments, in the reliable transport protocol, acknowledgment (ACK) and negative acknowledgment (NACK) messages are generated by the receiver endpoint processor (XPU) and sent to the sender XPU to report delivery status and drive retransmission behavior. The information required to convey these messages is carried inside the Reliable Transport Header (RTH) using the opcode to indicate ACK or NACK, the PSN to label transmitted packets, and the EPSN to inform the sender of the next in-order sequence number the receiver is prepared to accept. ACK and NACK information may be piggybacked on packets that already carry payload in the reverse direction, or it may be sent in standalone control packets that contain no payload; in one embodiment, a dedicated ACK is a compact 64-byte packet used when no reverse-path data is available within a configured timeout window. When an ACK is received, the sender frees state for all packets up to the acknowledged PSN and advances transmission; when a NACK is received, the sender rewinds to the indicated EPSN and retransmits from that point forward using a go-back-N procedure.

Table 12 below shows the overhead for each of the formats including the RTH. IPG refers to the Inter-packet gap of Ethernet.

**Table 12. Transport Header Overhead**

| Packet Type | L2 Overhead (B) | L3+L4 Overhead (B) | RTH Overhead (B) | Total Overhead (B) |
|---|---|---|---|---|
| AFH | 8(Preamble) + 16 (AFH) + 4(FCS) + IPG(1-8) = 29 to 36 | 0 | 8 (RTH) + 4(ECRC) = 12 | 41-48 |
| L2-IPv4-UDP | 8(Preamble) + 14(DA/SA/ET) + 4(FCS) + IPG(12) = 38 | 20(IPv4) + 8(UDP) = 28 | 8 (RTH) + 4(ECRC) = 12 | 78 |

In some embodiments, the system implements a reliable transport protocol to guarantee lossless, in-order delivery of memory transactions between endpoint processors (XPUs), even in scenarios where errors may occur inside the system or within the network switch fabric. Although Link Level Replay (LLR) provides protection against packet loss on individual Ethernet links, it cannot correct packet loss caused by soft errors inside the system or switching devices, and such losses, while rare, require an additional end-to-end mechanism. The reliable transport layer therefore ensures correctness beyond what link-level protection alone can provide.

To achieve this, in some embodiments, the system uses an ACK-based go-back-N protocol in which every transmitted packet carries a PSN assigned by the sender. The receiving XPU maintains an EPSN that identifies the next in-order packet it anticipates. When a packet arrives with a PSN equal to the EPSN, the receiver accepts the packet, increments its EPSN, and communicates this updated value back to the sender. This return information is embedded within the Reliable Transport Header (RTH) using fields that include an opcode identifying an ACK, along with the PSN and EPSN values needed to advance sender state. If the receiver instead observes a PSN that does not match the EPSN, it concludes that a packet has been missed, discards the out-of-order packet, updates error statistics, and uses the RTH to return a NACK, informing the sender of the correct EPSN from which retransmission may resume.

In some embodiments, in normal operation, the sender XPU transmits data packets forward toward the receiver XPU, while the receiver returns ACK or NACK information in the reverse direction, either piggybacked on other packets or in dedicated control packets when necessary. Acknowledgments allow the sender to free buffer space and advance its transmission window, while negative acknowledgments cause the sender to rewind to the indicated EPSN and retransmit all subsequent packets, ensuring that no gaps arise in the delivered sequence. In this manner, the reliable transport protocol detects lost or corrupted packets, repairs the loss through controlled retransmission, and preserves strictly ordered delivery across the network, providing robust end-to-end reliability even under conditions where packet loss would otherwise disrupt communication.

In some embodiments, for each destination endpoint processor (XPU), the sender maintains a EPSN that uniquely identifies every packet it transmits. Each outgoing packet includes the current PSN in its Reliable Transport Header (RTH), after which the sender increments the PSN in preparation for the next transmission. At the receiving XPU, the transport logic maintains an expected EPSN for every source XPU, representing the next in-order packet the receiver is prepared to accept. When a packet arrives, the receiver compares the packet's PSN with its EPSN. If they match, the packet is accepted and the receiver advances its EPSN to indicate the next expected PSN value.

In some embodiments, once an in-order packet is accepted, the receiver may inform the sender that the packet was successfully received and that the receiver has advanced its EPSN. To accomplish this, the receiver transmits the updated EPSN back to the sender. Whenever the receiver already has a packet to send in the reverse direction for the same virtual channel, it piggybacks the EPSN into the RTH of that packet. This opportunistic acknowledgment avoids generating extra packets and increases bandwidth efficiency. The receiver waits for a duration defined by an ACK timeout window to determine whether such a reverse-direction packet becomes available. If no packet is sent within this window, the receiver generates a dedicated 64-byte ACK packet that contains only an RTH and no payload, ensuring that acknowledgment proceeds without undue delay.

In some embodiments, if the receiver processes multiple in-order packets before sending an acknowledgment, it returns an EPSN corresponding to the highest PSN received, which implicitly acknowledges all earlier packets in the sequence. When the sender receives an ACK containing the updated EPSN, it frees all buffer space and internal state associated with the acknowledged packets and continues forward progress in the reliable transport protocol.

In some embodiments, when a receiving endpoint processor (XPU) encounters a packet whose PSN does not match its EPSN, the packet is immediately discarded because it is out of order, and the receiver generates a negative acknowledgment (NACK) directed back to the sender. Any later-arriving packets that still do not match the unchanged EPSN are also dropped, ensuring that no out-of-order packets enter the system until the missing packet is recovered. The NACK informs the sender that a packet has been lost and specifies the next PSN the receiver expects, which allows the sender to determine precisely where the sequence gap occurred. Upon receiving a NACK, the sender rewinds its transmit queue to the packet associated with the indicated EPSN and retransmits all subsequent packets in order, following the system's go-back-N semantics.

In some embodiments, the reliable transport protocol also addresses cases in which a sender-to-receiver packet is lost but no NACK is returned, either because the missing packet was the last packet of a transfer and no further forward traffic prompts a NACK, or because the NACK itself is lost in the reverse direction. To ensure recovery in these scenarios, the sender maintains a retransmission timer. If any outstanding packet remains unacknowledged beyond a configurable timeout, the sender assumes that either the data packet or the corresponding NACK has been lost. It then rewinds its queue to the oldest unacknowledged packet and retransmits from that point forward. This timer-based safeguard guarantees that every lost packet is eventually detected and corrected, even in the absence of explicit NACK signaling, and ensures that end-to-end reliable delivery is preserved under all permitted network and device failure modes.

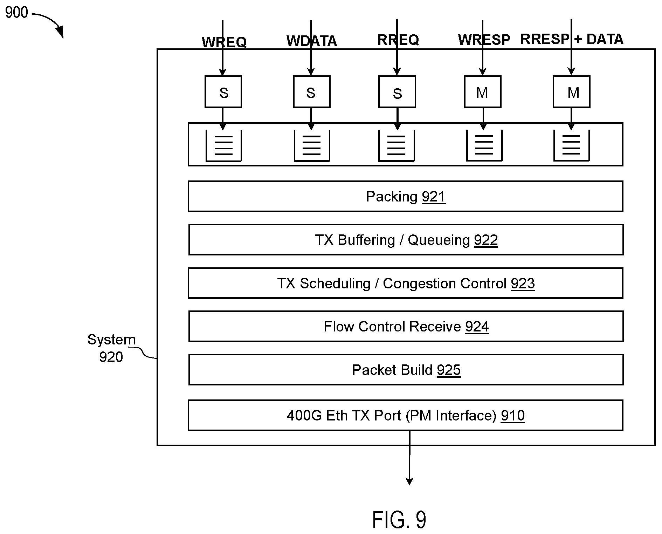

FIG. 9 is a diagram 900 illustrating an example network transmit path of an Ethernet-based load-store system 920, according to some embodiments. FIG. 9 illustrates the staged processing by which AXI4 transactions from an SoC are converted into Ethernet packets at a 400G transmit port provided by an eight-by-one-hundred-gigabit Ethernet PHY. In the arrangement shown, the transmit path accepts request-class inputs, including write-request address and control and write-data and read-request address and control, together with response-class inputs that include write-response control and read-response with data. These inputs are first normalized and then delivered to a packing stage 921 that aggregates whole AXI4 transactions into packet payloads on a per-destination and per-virtual-channel basis. The packing policy ensures that bytes from a single transaction are not split across packets and that packet size grows toward a configured threshold, up to a maximum of four kilobytes, while also allowing sub-threshold packets to be transmitted when required by traffic timing.

Downstream of packing, FIG. 9 shows transmit buffering and queueing 922 that organize packet payloads into per {destination endpoint, virtual channel} queues. This organization supports simultaneous, interleaved growth of up to two hundred fifty-six packet, one per active queue, and provides sufficient depth to bridge the loaded round-trip time of the reliable transport so that packets remain available for potential retransmission until acknowledged. The subsequent transmit scheduling and congestion-control stage 923 arbitrates among non-empty queues and enforces ordering and service discipline. In one embodiment, strict priority is given to protocol control traffic such as negative acknowledgments and dedicated acknowledgments, while first-time data transmissions and any required retransmissions are scheduled thereafter. Within and across virtual channels, scheduling combines arrival-order bias with a configurable preference for larger packets to improve on-wire efficiency, and a weighted deficit round-robin method at the port may be applied to enforce byte-weighted fairness between virtual channels. A fixed congestion window per {destination, virtual channel} bounds in-flight data so that destinations that exceed their window are temporarily ineligible until acknowledgments advance the window.

Before emission to the physical interface, FIG. 9 depicts a packet-build stage that inserts link-layer and network-layer headers and a reliable transport header, followed by generation of an ECRC over the payload. The system supports either a standards-based Layer 2, Internet Protocol version 4, and User Datagram Protocol encapsulation or a reduced-overhead Artificial Intelligence Fabric Header format, and a configuration table supplies per-virtual-channel and per-destination constants used to form the headers. The flow-control receive block 924 at the transmit boundary accepts pause signaling for each virtual channel in the form of Priority Flow Control or Ultra Ethernet Consortium credit-based flow control and applies it to the scheduler and queue gates, while the Ethernet PHY interface presents a 400G Ethernet transmit port that includes MAC and PCS functionality. In combination, the functions marked in FIG. 9, e.g., packing 921, transmit buffering and queueing 922, transmit scheduling and congestion control 923, flow-control reception 924, packet build 925, and interfacing to the Ethernet PHY 910, cooperate to transform AXI4 request and response traffic from the SoC into reliably delivered Ethernet packets at line rate.

In some embodiments, "packing" is the process by which the system accumulates bytes from arriving transactions into a single Ethernet packet on a per destination endpoint (XPU) and per virtual channel (VC) basis, using the XPUID provided by the system-on-chip (SoC) to select the destination. Transactions from different AXI channels may be co-packed so long as they target the same {destination XPU, VC}, since packing is intentionally channel-agnostic at this stage.

In some embodiments, each Ethernet packet may contain an integer number of whole transactions; the system never splits the bytes of a single transaction across multiple packets. Packet growth is regulated by a per-VC packet-size threshold, and packing continues until the packet size is greater than or equal to that configured threshold. When the threshold is met, the next arriving transaction begins a new packet. The threshold is configurable up to a maximum of 4 kilobytes.

In some embodiments, because transactions may arrive interleaved, a single packing operation can incorporate up to two control transactions and two control/data transactions before the threshold comparison is re-evaluated. As a result, the worst-case packet size is strictly less than (threshold- 1 + (2 × max control transaction + 2 × max control/data transaction)) as follows. 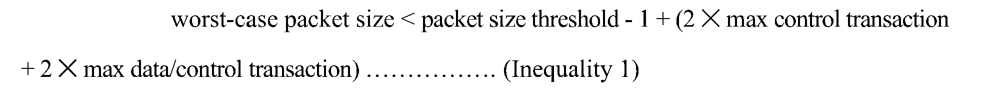 worst-case packet size < packet size threshold - 1 + (2 × max control transaction + 2 × max data/control transaction) (Inequality 1)

In some embodiments, in a case where transactions have a fixed data size, with a 4 kilobyte packet size threshold, an 18-byte maximum control transaction, and a 146-byte maximum control/data transaction, the maximum transmitted packet size is ≤ 4,424 bytes. Packets smaller than the threshold may still be transmitted when traffic patterns require it, and any packet smaller than the 64-byte Ethernet minimum is zero-padded before transmission to satisfy link-layer framing rules.

In some embodiments, the transmit packet buffer holds the byte-packed memory transactions that have been assembled into packet payloads and are awaiting transmission on the 400G Ethernet port. These payloads are the result of the system's packing process, which aggregates complete AXI transactions into contiguous byte streams before they are scheduled for emission. The transmit packet buffer provides the staging area in which these fully packed payloads reside while they are organized into per-destination, per-virtual-channel queues and await selection by the transmit scheduler. Its capacity and organization allow the system to sustain the required loaded round-trip time of the reliable transport protocol and to support interleaved packet buildup across many active queues without loss or reordering.

In some embodiments, the transmit (TX) buffer space fulfills two essential roles in the Ethernet-based load-store system's reliable-transport architecture. First, it supports simultaneous, interleaved packing across all active TX queues, allowing multiple destination-and-virtual-channel (VC) flows to grow packet payloads in parallel without blocking one another. Second, it provides sufficient buffering depth to cover the loaded round-trip time (RTT) of the reliable transport protocol, ensuring that all packet data required for potential retransmission remains available until the corresponding acknowledgment (ACK) is received. These requirements arise because the system may or must retain every transmitted packet in buffer until either an ACK or a retransmission event resolves its state.

In some embodiments, at initialization, software allocates dedicated TX buffer space for each VC, with no sharing between VCs. This separation guarantees that request-class traffic and response-class traffic, which occupy different VCs, do not contend for buffer resources and cannot cause deadlock or head-of-line blocking due to cross-VC interference. The fixed allocation per VC is sized so that each VC can independently sustain the worst-case combination of packet-assembly behavior and loaded RTT requirements without exhausting buffer capacity.

In some embodiments, the system performs packing at the tail of each transmit (TX) queue, where arriving memory transactions are appended to the currently forming packet for that queue. As long as the accumulating packet remains below its configured per-virtual-channel (VC) packet-size threshold, each new transaction is merged into the same packet. When the threshold is reached or exceeded, the next incoming transaction automatically begins a new packet, ensuring that each packet remains within the system's maximum packing limits.

In some embodiments, the TX buffer space enables this behavior by allowing transactions destined for different {endpoint, VC} queues to arrive interleaved with one another. Because the system supports up to 256 TX queues, each corresponding to a distinct destination XPU and VC combination, multiple packets may grow concurrently, one per active queue. In highly interleaved traffic patterns, many packets may accumulate bytes in parallel, and the size each packet can ultimately reach is bounded by both the per-VC threshold and the total available TX buffer capacity. This buffering structure can ensure that the packing process remains efficient even under heavy load and diverse traffic mixes, while preventing any packet from exceeding the space permitted by the overall TX buffer allocation and maintaining the strict transaction-integrity and packet-size guarantees defined by the system's reliable-transport design.

In some embodiments, the reliable transport protocol causes the sender to retain packet data in the transmit buffer until an acknowledgment (ACK) is received for that packet, ensuring that retransmission is possible if a loss is detected. The total amount of packet data that may be buffered is governed by the loaded round-trip time (RTT) between the sender and the receiver at the operating 400G port rate. This RTT encompasses the full sequence of events involved in reliable delivery: the time needed for the sender to transmit packet data, the time for the receiver to accept and process the packet, the time for the receiver to generate and transmit the corresponding ACK, and the time required for that ACK to return to the sender and update the sender's transport state.

In some embodiments, because the system operates with two virtual channels (VCs) that independently carry request and response traffic, the buffering requirement may or must be met per VC, resulting in a total storage requirement equal to the per-VC RTT buffer multiplied by the number of VCs. The architecture is engineered around a 4-microsecond target loaded RTT, which includes delays introduced by the network switch and internal system pipelines. This ensures that sufficient transmit-side packet data remains available for any required retransmission while maintaining full-rate operation across both virtual channels.

In some embodiments, the transmit buffer is organized into per-{destination endpoint (XPU), virtual channel (VC)} queues, yielding two hundred fifty-six queues for one hundred twenty-eight endpoints across two VCs. Within a given VC, buffer space is not pre-reserved per queue; instead, all queues in that VC opportunistically share the VC's allocation as arrivals occur, which preserves isolation between VCs while allowing flexible utilization within each VC.

In some embodiments, packet emission uses a two-stage hierarchical scheduling. A queue scheduler first selects among non-empty queues within each VC independently, then a VC scheduler selects between the two VCs for port service. Each active transmit queue may request service with one of several packet classes: negative acknowledgment (NACK) control packets without payload, dedicated acknowledgment (ACK) control packets without payload, retransmissions triggered by a received NACK or a retransmit timeout, or first-time data packets that carry payload. The queue scheduler applies strict priority in that order, with NACKs and retransmissions expected to be infrequent and dedicated ACK rate shaped by an acknowledgment timeout and by piggybacking acknowledgments into reverse-direction data when available. When scheduling data packets, the queue scheduler balances two configurable, orthogonal priorities: arrival order, to minimize latency based on the time the first byte of a packet was packed, and packet size, to improve wire efficiency by favoring larger packets whose header overhead is proportionally smaller. Software tunes the tradeoff between these two objectives so that smaller, earlier packets do not starve larger, later ones, or vice versa.

In some embodiments, at the second stage, the port scheduler arbitrates across VCs with the same strict priority between NACKs, dedicated ACKs, and data traffic, and uses a weighted deficit round robin (WDRR) algorithm for data arbitration across VCs. Each VC's weight is software-configurable from one to sixteen, applied to byte counts that include preamble and inter-packet gap, and the WDRR stage can optionally bias service against smaller packets when one VC tends to produce much larger payloads than the other, a condition the queue-level size bias cannot address because it operates only within a single VC. The system also supports optional port shaping on a per-400-gigabit-per-second port basis to prevent packet data from accumulating in the switch output buffer memory (OBM), and the scheduler accepts per-VC, lossless link-level flow-control signals in the form of Priority Flow Control (PFC) or Ultra Ethernet Consortium credit-based flow control (CBFC), as selected by software.

In some embodiments, for congestion control, to bound in-flight data and protect destinations from overload, the system enforces a fixed congestion window per {destination XPU, VC}. The window size and the maximum allowed in-flight bytes are software-configured per VC. If a destination exceeds its configured in-flight allowance, it is temporarily marked ineligible by the scheduler until acknowledgments advance the window and eligibility is restored.

In some embodiments, for packet build, before transmission, a packet-build stage constructs the on-wire frame using software-programmed templates that specify Layer-2, Layer-3/Layer-4 headers and the Reliable Transport Header (RTH) for each {VC, XPUID} combination. Using this configuration together with the current transmit-queue state, the system generates the L2/L3/L4 headers, emits the RTH reflecting fields such as destination endpoint and sequence state, appends an ECRC over the payload, and inserts zero padding when required to meet a configured minimum Ethernet frame size.

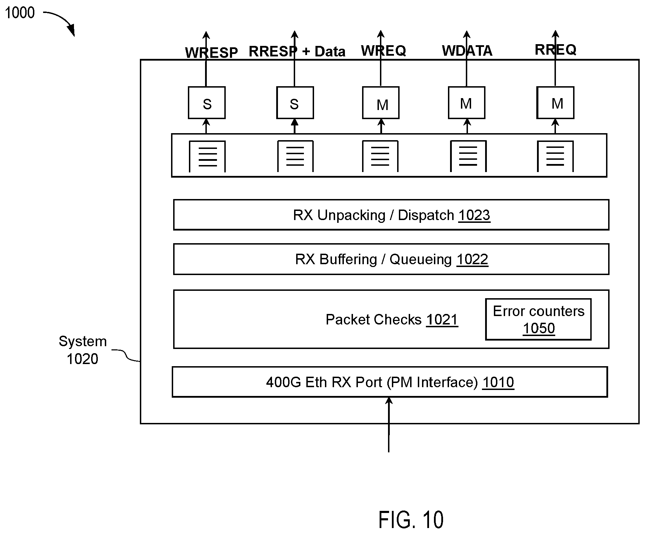

FIG. 10 is a diagram 1000 illustrating an example network receive path of an Ethernet-based load-store system 1020, according to some embodiments. FIG. 10 shows how incoming Ethernet packets are processed, validated, unpacked, and delivered to the SoC as AXI transactions. In this embodiment, the receive path begins by accepting, via Ethernet PHY interface 1010, Ethernet packets arriving from the 400G Ethernet PHY, which provides the underlying MAC and/or PCS functionality. Once a packet is received, the system performs a sequence of standard protocol checks and/or system-specific integrity checks 1021 to ensure that only valid packets pass into the reliable-transport layer. These checks include verification of the Ethernet frame check sequence (FCS), confirmation that the encapsulation matches the configured transport format such as Layer-2-Internet Protocol version 4-User Datagram Protocol (L2-IPv4-UDP) or Artificial Intelligence Fabric Header (AFH), examination of IPv4 header fields when applicable, and validation of the reliable transport header including its version, cyclic redundancy check, and partition identifier.

After a packet passes header and data integrity checks 1021, FIG. 10 shows that the system executes the receive-side logic of the reliable transport protocol. In this stage, the system evaluates the PSN contained in the reliable transport header against the expected sequence number maintained for the corresponding endpoint and virtual channel (VC). When the packet arrives in-order, the expected sequence number is advanced and acknowledgment information is prepared for return in the reverse direction. If the packet is out-of-order or missing, the system drops the packet, increments error statistics, and generates a negative acknowledgment to request retransmission. This reliable-transport processing ensures lossless, ordered delivery of packetized memory transactions even in the presence of soft errors or occasional packet loss within the switch fabric.

Following protocol validation, FIG. 10 depicts the buffering 1022 of packet payload on a per-virtual-channel basis in dedicated receive buffers. Only the payload portion of each packet is written into these buffers, as network headers, padding, and ECRCs are removed during parsing. The system then unpacks 1023 the byte-packed payload back into "unpacked" AXI transactions and deposits them into shallow, per-channel unpacked FIFOs. These FIFOs correspond to AXI channel semantics: read-response and write-response transactions are associated with the response virtual channel, while read-request and write-request metadata and payload are associated with the request virtual channel. Flow control at the receive boundary is enforced by the unpacked FIFOs; when they reach capacity, they assert backpressure into the packed-buffer stage, which in turn asserts lossless flow control such as Priority Flow Control (PFC) or Ultra Ethernet Consortium credit-based flow control (CBFC) toward the MAC/PCS layer. Once space becomes available, unpacked transactions are forwarded into the SoC via the AXI master and AXI slave interfaces, completing the conversion from Ethernet packet back into AXI-compliant memory transactions.

In some embodiments, upon receipt of a network frame, the system parses the packet and applies a sequence of validation checks before admitting any payload to reliable-transport processing. The parser operates on Ethernet frames and first verifies the frame check sequence (FCS); any frame that fails FCS is discarded and recorded in error counters (e.g., sequence error counter 1050). The system also enforces a configured maximum transmission unit (MTU) and drops and counts any frame whose length exceeds that MTU. Software selects the network header format used by the system-either Layer-2/Internet Protocol version 4/User Datagram Protocol (L2-IPv4-UDP) or the Artificial Intelligence Fabric Header (AFH)-and the Layer-2 check confirms that the received frame's Ethertype corresponds to the configured format; frames with a non-matching Ethertype are similarly dropped and counted.

In some embodiments, if the packet is L2-IPv4-UDP, the following IPv4/UDP checks are performed on IPv4 packets as shown in Table 13. Most of these checks are from section 5.2.2 of RFC1812. If any of these errors occur, the packet is dropped and an associated counter is incremented.

**Table 13. IPv4 Packet Checks.**

| # | CHECK | NOTES |
|---|---|---|
| 1 | Minimum Length Check | IPv4 header total length < 20 is an error |
| 2 | Header Checksum Check | header checksum (covering complete IPv4 header) is checked |
| 3 | Version Check | Version field != 4 is an error |
| 4 | Header Length Check | IHL (internet header length)<5 is an error |
| 5 | Total Packet Length Check | number of bytes remaining in the frame < 20 is an error |
| 6 | Options Check | IHL!=5 is an error |
| 7 | Fragmentation Check | MF=1 or offset! =0 is an error |
| 8 | L3 Length Check | IPv4 total length != received packet length is an error |

In some embodiments, the UDP checksum is ignored for all frames. The UDP length check is validated. If this fails, the packet is dropped and a counter is incremented.

In some embodiments, after the system parses an incoming Ethernet frame and identifies the configured encapsulation (Layer-2/Internet Protocol version 4/User Datagram Protocol or Artificial Intelligence Fabric Header), it expects the next eight bytes to be the Reliable Transport Header (RTH). The system verifies the RTH version and validates ECRC; failure of either test causes the packet to be dropped and an error counter to be incremented. The RTH also carries a partition field that may or must match a software-configured value used for multi-tenant and/or job isolation; a partition mismatch likewise results in a drop and an incremented counter.

In some embodiments, packets that pass header and integrity screening are subjected to reliable transport checks. The receiver compares the packet's PSN in the RTH against the receiver's EPSN for that flow. If the PSN does not equal the EPSN, the packet is considered out of order and is dropped, an associated counter is incremented, and a reverse-path negative acknowledgment (NACK) is generated to prompt retransmission beginning at the indicated EPSN.

In some embodiments, payload from packets that pass all checks is written into receive packed buffers on a per-virtual-channel basis, with one packed buffer per virtual channel (VC). Only the payload portion is stored; link-layer and network-layer headers, ECRC, and any padding are discarded at parse time. The packed buffers are then read to unpack the byte-packed payload back into AXI transactions that are queued in unpacked first-in/first-out (FIFO) structures sized shallowly and indexed by {interface channel, VC}. In this organization, the VC0 packed buffer holds request-class transactions that are unpacked into the write-address (AW), write-data (W), and read-address (AR) FIFOs, while the VC1 packed buffer holds response-class transactions that are unpacked into the read-data (R) and write-response (B) FIFOs. These unpacked FIFOs correspond to the channelized AXI datapath and are the same logical structures referenced in the AXI datapath/credit-loop description.

In some embodiments, flow control at the receive side is enforced hierarchically. If an unpacked FIFO for a given {interface channel, VC} saturates due to downstream backpressure from the system-on-chip, it asserts flow control toward its corresponding packed buffer for that traffic class (request or response), which temporarily halts reads from the packed buffer. At the network boundary, the RX packed buffers act as the source of lossless link-level flow control, and their sizing accounts for the Priority Flow Control (PFC) response time of the switch, added hysteresis to limit the worst-case on-wire rate of PFC XON/XOFF exchanges, and sufficient burst absorption to accommodate transient surges. This arrangement prevents overflow while preserving ordered delivery and ensures that the system can backpressure the network cleanly under heavy load.

In some embodiments, Table 14 lists the statistics counters supported by the system per 400G port. These are intended to be used for traffic monitoring and performance debug.

**Table 14. Software Accessible Statistics**

| COUNTER | INDEX | BITS | DETAILS |
|---|---|---|---|
| SOC_TO_system_TRANSACTIONS | {Interface, Channel} | 48 | Number of transactions on SoC->system Channel Interfaces |
| TX_ETH_PACKETS_PACKETS | VC | 48 | Number ethernet packets transmitted |
| TX_ETH_PACKETS_BYTES | VC | 56 | Number ethernet data bytes transmitted |
| TX_SEL_XPUID_ETH_PACKETS | VC | 48 | Number ethernet packets transmitted for selected XPU destination |
| TX_SEL_XPUID_ETH_BYTES | VC | 56 | Number ethernet data bytes transmitted for selected XPUID |
| TX_ETH_PACKET_DIST_64_127 | VC | 48 | Ethernet transmitted packets distribution |
| TX_ETH_PACKET_DIST_128_255 | VC | 48 | Ethernet transmitted packets distribution |
| TX_ETH_PACKET_DIST_256_511 | VC | 48 | Ethernet transmitted packets distribution |
| TX_ETH_PACKET_DIST_512_1023 | VC | 48 | Ethernet transmitted packets distribution |
| TX_ETH_PACKET_DIST_1024_2047 | VC | 48 | Ethernet transmitted packets distribution |
| TX_ETH_PACKET_DIST_2048_4095 | VC | 48 | Ethernet transmitted packets distribution |
| TX_ETH_PACKET_DIST_>4095 | VC | 48 | Ethernet transmitted packets distribution |
| TX_EMPTY_PAYLOAD_PACKET_COUNT | VC | 48 | Ethernet transmitted packets distribution |
| TX_BUFF_CYCLES_ABOVE_THRESH | VC | 56 | Buffer occupancy greater than a globally configured threshold |
| TX_TOTAL_PFC_XOFF_CYCLES | VC | 56 | Total cycles with TX path received PFC OFF |
| TX_TOTAL_PKT_RETRANSMITS | VC | 48 | Total number of retransmits |
| RX_ETH_PACKETS_PACKETS | VC | 48 | Number ethernet packets received |
| RX_ETH_PACKETS_BYTES | VC | 56 | Number ethernet data bytes received |
| RX_SEL_XPUID_ETH_PACKETS | N/A | 48 | Number ethernet packets received for selected XPUID |
| RX_SEL_XPUID_ETH_BYTES | N/A | 56 | Number ethernet data bytes received for selected XPUID |
| RX_ETH_PACKET_DIST_64_127 | VC | 48 | Ethernet received packets distribution |
| RX_ETH_PACKET_DIST_128_255 | VC | 48 | Ethernet received packets distribution |
| RX_ETH_PACKET_DIST_256_511 | VC | 48 | Ethernet received packets distribution |
| RX_ETH_PACKET_DIST_512_1023 | VC | 48 | Ethernet received packets distribution |
| RX_ETH_PACKET_DIST_1024_2047 | VC | 48 | Ethernet received packets distribution |
| RX_ETH_PACKET_DIST_2048_4095 | VC | 48 | Ethernet transmitted packets distribution |
| RX_ETH_PACKET_DIST_>4095 | VC | 48 | Ethernet transmitted packets distribution |
| TX_EMPTY_PAYLOAD_PACKET_COUNT | VC | 48 | Ethernet received packets distribution |
| RX_OVERFLOW_PACKETS | VC | 48 | Ethernet packets dropped due to RX buffer overflow |
| RX_TOTAL_PFC_XOFF_CYCLES | VC | 56 | Total cycles with RX path sent PFC OFF |
| RX_UNPACKED_ZERO_CREDIT_CYCLES | {Interface, Channel} | 56 | Total cycles RX unpacked FIFO had zero credits |
| RX_UNPACKED_FULL_CYCLES | {Interface, Channel} | 56 | Total cycles unpacked FIFO full |
| system_TO_SOC_TRANSACTIONS | {Interface, Channel} | 48 | Number of transactions on system->SoC Channel Interfaces |
| RX_NACKS_RECEIVED | VC | 48 | Number received NACKs |
| RX_ECRC_FAILURES | N/A | 48 | Number received packets with rCRC failure |
| PFC XOFF Activity Count | {Direction, VC} | 48 | PFC XON + XOFF Activity count since last sample |
| PFC XOFF Max Duration | {Direction, VC} | 48 | PFC XOFF Max longest XOFF time since last sample |
| PFC XOFF Total Duration | {Direction, VC} | 48 | PFC XOFF Max total XOFF time since last sample |
| PFC Monitor Timestamp | {Direction, VC} | 48 | PFC Timestamp |

In some embodiments, Table 15 lists the errors which are indicated per 400G port to software through interrupt status registers:

**Table 15. Error Events**

| CATEGORY | DETAILS | COUNTED |
|---|---|---|
| TX Interface Buffer | Per Interface/channel/VC FIFO overflow | NO |
| TX VC Buffer | TX buffer overflow, per VC | NO |
| TX Received ACK | EPSN Check | NO |
| TX Retransmit | Retransmission retry check | NO |
| | Ethernet FCS check | YES |
| | Ethernet ethertype check | NO |
| | IPv4 Minimum length check | NO |
| | IPV4 Header checksum error | NO |
| | IPv4 Version check | NO |
| | Fragmentation/IHL check | NO |
| | UDP length check | YES |
| RX Packet Checks | ECRC check | YES |
| | IPv4 source address check | NO |
| | RTH partition check | YES |
| RX PSN | Received packet's PSN does not match EPSN | YES |
| RX Packed Buffer | Overflow, per VC | NO |
| RX Unpacked Buffer | Unpack parsing error, per VC | NO |
| AXI Target I/F Error | Access to unimplemented address | NO |

In some embodiments, the 8×100 Ethernet PHY generates its own set of interrupt signals, which report conditions associated with its internal subsystems, including PCS status, MAC events, physical medium dependent (PMD) conditions, and general port-status indications. In some embodiments, these port-macro-generated interrupts are not exposed as independent signals at the system level; instead, they are logically merged into the interrupt signal of the 400G port 0. This consolidation allows software to process both system-level and port-macro-level interrupt events through a single interrupt pathway while still distinguishing specific causes using the corresponding interrupt-status registers.

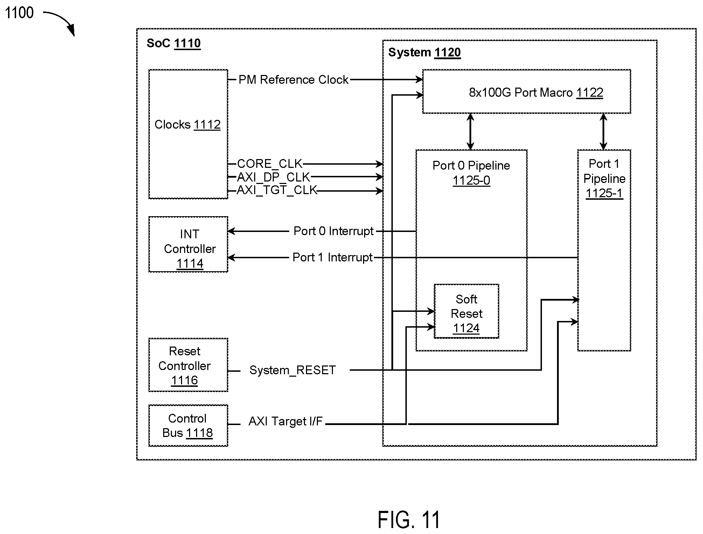

FIG. 11 is a diagram 1100 illustrating an example integration of an Ethernet-based load-store system 1120 with system-on-chip (SoC) logic 1110, according to some embodiments. FIG. 11 depicts integration of the Ethernet-based load-store system with SoC logic, where a "subsystem" comprises two instances 1125-0, 1125-1 of the Ethernet-based load-store system and one eight-by-one-hundred-gigabit Ethernet PHY 1122. In some embodiments, the term "system-on-chip (SoC) logic" may refer to the host-side digital logic that presents master and slave interfaces (e.g., AXI interface) to a load-store system, including the buffers, mapping logic, and flow-control circuitry that generate transactions (e.g., AXI transactions) and accept returned responses. For example, the SoC logic may implement functions such as mapping AXI control fields into xCTL, xXPUID, and xCTLTYPE signals, managing per-channel credit counters for rate control, and providing readiness signaling such as S2E_READY for coordinated initialization with the remote transport subsystem. Depending on implementation, SoC logic may include processor cores, memory controllers, interconnect fabric, or other compute elements that issue memory transactions requiring packetization and transport across high-speed Ethernet.

In some embodiments, the 8×100 Ethernet PHY (1122) supplies the MAC and/or PCS functions for two four-hundred-gigabit-per-second (400G) Ethernet ports, and FIG. 11 further shows clocking 1112, interrupt 1114, reset 1116, and/or control-bus 1118 used to coordinate datapaths on both ports with the SoC 1110. The subsystem receives a port-macro reference clock and three SoC-provided clocks identified as a core clock (CORE_CLK), an AXI datapath clock (AXI_DP_CLK), and an AXI target clock (AXI_TGT_CLK). The integration also exposes one interrupt signal per 400G port from the Ethernet-based load-store system and two interrupts from the Ethernet PHY that are mapped into port 0, together with an Advanced eXtensible Interface (AXI) target interface used by software to configure internal registers and memories through a small SoC address window.

In some embodiments, reset integration is centralized through a single active-low top-level signal identified as System_RESET_N, which is expected to be driven by a control and status register bit at the SoC level. Asserting System_RESET_N resets all logic within the subsystem, including both 400G port pipelines, all Ethernet-based load-store system and SoC datapath interfaces, the AXI target interface block, and the Ethernet PHY. Following deassertion, the software driver sequences power-on bring-up by ensuring clocks are stable, deasserting reset, initializing and configuring the subsystem, and enabling the transmit (TX) and receive (RX) pipelines. The driver also performs the port-macro bring-up, including PCS and MAC configuration and physical medium dependent (PMD) tasks, and it applies the standard 400G pipeline initialization and enables required for line-rate operation. FIG. 11 additionally shows that the integration supports a per-instance soft-reset 1124 procedure that allows software to reset a single 400G port pipeline without disturbing the neighboring port within the shared Ethernet PHY. During this soft reset, packet data resident in the affected port's MAC, TX pipeline, and RX pipeline is flushed, configuration state in those pipelines and in the MAC is reset, and the link may either remain up or be intentionally taken down depending on software policy.

In some embodiments, AXI credit-loop behavior at the SoC boundary supports up to one hundred twenty-eight credits per channel to span a round-trip latency of approximately one hundred twenty-eight clock cycles at one gigahertz on AXI_DP_CLK. The latency budget includes the time to transmit a transaction from the source, pipeline flight time to the receiver, receive-side buffering and credit generation, credit-return flight time, and source-side credit processing. In this accounting, the Ethernet-based load-store system requires about twenty clock cycles as a source, inclusive of transaction transmit and returned-credit processing, and about twenty clock cycles as a receiver, inclusive of receipt, processing, and credit return. The credit depth and timing ensure that, once software completes initialization, the sender can sustain full bandwidth while awaiting returned credits and that ingress is inherently rate-matched to downstream packed buffers and schedulers.

The elements shown in FIG. 11, e.g., two Ethernet-based load-store system instances with a shared 8×100 Ethernet PHY, unified reset control through System_RESET_N, software-orchestrated power-on and soft-reset flows, per-port interrupts, AXI target access for configuration, and explicitly clocked domains at CORE_CLK, AXI_DP_CLK, and AXI_TGT_CLK-provide a concrete SoC-level integration blueprint that enables dual-port 400G operation with deterministic flow control and reliable transport semantics.

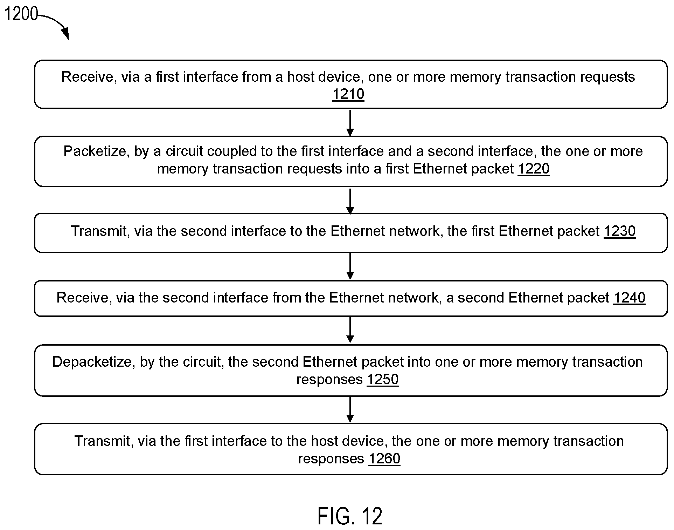

FIG. 12 is a flow diagram showing an example process 1200 for transporting memory transactions over an Ethernet network, according to some embodiments. In some embodiments, the process 1200 may transport memory transactions over an Ethernet network. In some embodiments, the process 1200 is performed by one or more processors (e.g., the processor 121) or one or more circuits of a device (e.g., the device 102, the network device 106, Ethernet-based load-store system 200, 300, 420, 521, 522, 620, 720, 760, 820, 860, 920, 1020, 1120). In other embodiments, the process 1200 is performed by other entities. In some embodiments, the process 1200 includes more, fewer, or different steps than shown in FIG. 12.

At step 1210, a circuit of the device may receive, via a first interface (e.g., AXI interfaces 230) from a host device, one or more memory transaction requests. The one or more memory transaction requests may include one or more memory read requests or one or more memory write requests. The circuit may be coupled to the first interface and a second interface (e.g., Ethernet PHY 210). The first interface may be configured to communicate with the host device. In some embodiments, the second interface may be configured to exchange Ethernet packets with the Ethernet network. The second interface may include media access control (MAC) processing circuity and physical coding sublayer (PCS) processing circuitry.

At step 1220, the circuit may packetize one or more memory transaction requests received from the first interface, into a first Ethernet packet. At step 1230, the circuit may transmit, via the second interface to the Ethernet network, the first Ethernet packet.

At step 1240, the circuit may receive, via the second interface from the Ethernet network, a second Ethernet packet. At step 1250, the circuit may depacketize the second Ethernet packet received from the second interface, into one or more memory transaction responses. The one or more memory transaction responses include one or more memory read responses or one or more memory write responses.

At step 1260, the circuit may transmit, via the first interface to the host device, the one or more memory transaction responses.

In some embodiments, the first interface (e.g., AXI master interface) may be configured to communicate with the host device using a plurality of channels (e.g., AW, W, B, AR, R channels). The first interface may be configured to receive, from the host device, a memory write request including a write address (e.g., write address 301) and write data (e.g., write data 302) which are received through different channels among the plurality of channels. The circuit may be configured to align the write address and the write data prior to packetizing the memory write request. In some embodiments, the circuit may maintain one or more per-channel transmit queues (e.g., per-channel TX queues 422).

In some embodiments, the circuit may be configured to perform credit-based flow control per channel (e.g., credit-based channels 306, 307, 308, 309, 310) between a sender and a receiver of one or more transactions. The sender may decrement a credit counter (e.g., credit counter 624) upon issuing a transaction and the receiver may return a credit to the sender (e.g., credit return 622) when the buffer resource (e.g., memory buffer) which was consumed by the transferred transaction is freed (e.g., based on received ACKs).

In some embodiments, the circuit may be configured to perform end-to-end integrity check on each of the first Ethernet packet and the second Ethernet packet using an end-to-end cyclic redundancy check (ECRC) to protect at least payload of each packet across the Ethernet network.

In some embodiments, the circuit may be configured to aggregate a plurality of memory transactions destined to a common endpoint into a single Ethernet packet up to a configurable packet size threshold. The circuit may not split a single transaction across a plurality of Ethernet packets.

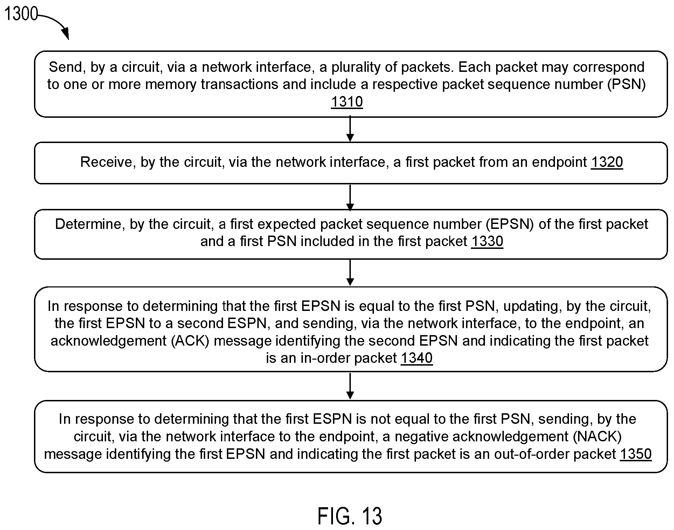

FIG. 13 is a flow diagram showing an example process 1300 for transporting memory transactions over an Ethernet network, according to some embodiments. In some embodiments, the process 1300 may transport memory transactions over an Ethernet network. In some embodiments, the process 1300 is performed by one or more processors (e.g., the processor 121) or one or more circuits of a device (e.g., the device 102, the network device 106, Ethernet-based load-store system 200, 300, 420, 521, 522, 620, 720, 760, 820, 860, 920, 1020, 1120). In other embodiments, the process 1300 is performed by other entities. In some embodiments, the process 1300 includes more, fewer, or different steps than shown in FIG. 13.

At step 1310, a circuit of the device may send, via a network interface (e.g., Ethernet PHY 210), a plurality of packets. Each packet may correspond to one or more memory transactions and include a respective packet sequence number (PSN). In some embodiments, the respective PSN may be included in a reliable transport header of each header.

At step 1320, the circuit may receive, via the network interface, a first packet from an endpoint. At step 1330, the circuit may determine, a first expected packet sequence number (EPSN) of the first packet and a first PSN included in the first packet.

At step 1340, in response to determining that the first EPSN is equal to the first PSN, the circuit may update, the first EPSN to a second ESPN, and send, via the network interface, to the endpoint, an acknowledgement (ACK) message identifying the second EPSN and indicating the first packet is an in-order packet.

At step 1350, in response to determining that the first ESPN is not equal to the first PSN, the circuit may send, via the network interface to the endpoint, a negative acknowledgement (NACK) message identifying the first EPSN and indicating the first packet is an out-of-order packet.

In some embodiments, in response to determining that the first ESPN is not equal to the first PSN, the circuit may drop the first packet, increment a sequence error counter (e.g., sequence error counter 1050), and send the NACK to the endpoint.

In some embodiments, the circuit may receive a second ACK message identifying an EPSN that is greater than PSNs of multiple previously transmitted packets. The circuit may free one or more buffers associated with one or more implicitly acknowledged packets.

In some embodiments, the circuit may receive multiple in-order packets. The circuit may be configured to determine a particular EPSN using a maximum PSN of the multiple in-order packets. The circuit may send a single ACK message identifying the particular EPSN and indicating the multiple in-order packets.

In some embodiments, the circuit may protect payload associated with each packet using an end-to-end CRC (ECRC) check by dropping a packet failing the ECRC check. In some embodiments, the circuit may generate a NACK message if an out of order packet is received (e.g., received PSN is not equal to EPSN). In some embodiments, the circuit may prioritize transmission of ACK messages and NACK messages above transmission of data packets.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A circuit coupled to a network interface and configured to:
send, via the network interface, a plurality of packets, each corresponding to one or more memory transactions and including a respective packet sequence number (PSN);
receive, via the network interface, a first packet from an endpoint;
determine a first expected packet sequence number (EPSN) of the first packet and a first PSN included in the first packet;
in response to determining that the first EPSN is equal to the first PSN, update the first EPSN to a second ESPN, and send, via the network interface, to the endpoint, an acknowledgement (ACK) message identifying the second EPSN and indicating the first packet is an in-order packet; and
in response to determining that the first ESPN is not equal to the first PSN, send, via the network interface, to the endpoint, a negative acknowledgement (NACK) message identifying the first EPSN and indicating the first packet is an out-of-order packet.

2. The circuit of claim 1, wherein
the respective PSN is included in a reliable transport header of each header.

3. The circuit of claim 1 or 2, wherein the circuit is further configured to:
in response to determining that the first ESPN is not equal to the first PSN, drop the first packet, increment a sequence error counter, and send the NACK to the endpoint.

4. The circuit of any one of the claims 1 to 3, wherein the circuit is further configured to:
receive a second ACK message identifying an EPSN that is greater than PSNs of multiple previously transmitted packets, and
free one or more buffers associated with one or more implicitly acknowledged packets.

5. The circuit of any one of the claims 1 to 4, wherein the circuit is further configured to:
receive multiple in-order packets;
determine a particular EPSN using a maximum PSN of the multiple in-order packets; and
send a single ACK message identifying the particular EPSN and indicating the multiple in-order packets.

6. The circuit of any one of the claims 1 to 5, wherein the circuit is further configured to:
protect payload associated with each packet using an end-to-end CRC (ECRC) check by dropping a packet failing the ECRC check.

7. The device of any one of the claims 1 to 6, wherein the circuit is further configured to:
prioritize transmission of ACK messages and NACK messages above transmission of data packets.

8. A device, comprising:
a network interface; and
a circuit as set forth in any one of the preceding claims, wherein the circuit is coupled to the network interface.

9. A method, comprising:
sending, by a circuit, via a network interface, a plurality of packets, each corresponding to one or more memory transactions and including a respective packet sequence number (PSN);
receiving, by the circuit, via the network interface, a first packet from an endpoint;
determining, by the circuit, a first expected packet sequence number (EPSN) of the first packet and a first PSN included in the first packet;
in response to determining that the first EPSN is equal to the first PSN, updating, by the circuit, the first EPSN to a second ESPN, and sending, via the network interface, to the endpoint, an acknowledgement (ACK) message identifying the second EPSN and indicating the first packet is an in-order packet; and
in response to determining that the first ESPN is not equal to the first PSN, sending, by the circuit, via the network interface to the endpoint, a negative acknowledgement (NACK) message identifying the first EPSN and indicating the first packet is an out-of-order packet.

10. The method of claim 9, wherein
the respective PSN is included in a reliable transport header of each header.

11. The method of claim 9 or 10, further comprising:
in response to determining that the first ESPN is not equal to the first PSN, dropping the first packet, incrementing a sequence error counter, and sending the NACK to the endpoint.

12. The method of any one of the claims 9 to 11, further comprising:
receiving a second ACK message identifying an EPSN that is greater than PSNs of multiple previously transmitted packets, and
freeing one or more buffers associated with one or more implicitly acknowledged packets.

13. The method of any one of the claims 9 to 12, further comprising:
receiving multiple in-order packets;
determining a particular EPSN using a maximum PSN of the multiple in-order packets; and
sending a single ACK message identifying the particular EPSN and indicating the multiple in-order packets.

14. The method of any one of the claims 9 to 13, further comprising:
protecting payload associated with each packet using an end-to-end CRC (ECRC) check by dropping a packet failing the ECRC check.

15. The method of any one of the claims 9 to 14, further comprising:
prioritizing transmission of ACK messages and NACK messages above transmission of data packets.
